# EUROPÄISCHE PATENTSCHRIFT

(11) **EP 3 177 487 B1**
(45) Veröffentlichungstag und Bekanntmachung des Hinweises auf die Patenterteilung: **02.01.2019**
(21) Anmeldenummer: 15752981.9
(22) Anmeldetag: 06.08.2015
(51) Int. Cl.: B60R 11/02, H04M 1/04

(54) **HALTER FÜR FLACHE IN ETWA RECHTECKIGE GERÄTE WIE TABLET-COMPUTER ODER SMARTPHONES**
HOLDER FOR FLAT, APPROXIMATELY RECTANGULAR DEVICES, SUCH AS TABLET COMPUTERS OR SMARTPHONES
SUPPORT POUR SURFACE D'APPAREILS APPROXIMATIVEMENT RECTANGULAIRES TELS LES TABLETTES NUMÉRIQUES OU LES SMARTPHONES

(30) Priorität: 07.08.2014 CH 11992014; 12.09.2014 CH 13842014; 14.09.2014 CH 13922014; 07.10.2014 CH 15292014; 16.11.2014 CH 17712014; 03.12.2014 CH 18662014; 31.12.2014 CH 32015; 25.02.2015 CH 2642015; 08.05.2015 CH 6502015; 15.06.2015 CH 8682015
(43) Veröffentlichungstag der Anmeldung: 14.06.2017
(73) Patentinhaber: Kinetix AG, 7000 Chur (CH)
(72) Erfinder: ACKERET, Peter, CH-8048 Zürich (CH); KELLER, Andreas Michael, 72250 Freudenstadt (DE); MEYER, Florian, 85778 Haimhausen (DE)
(74) Vertreter: DREISS Patentanwälte PartG mbB
(86) Internationale Anmeldenummer: PCT/EP2015/068166
(87) Internationale Veröffentlichungsnummer: WO 2016/020480

(56) Entgegenhaltungen:
- FR-A1- 2 981 820
- US-A- 5 251 771
- US-A1- 2002 195 771
- US-A1- 2013 200 119

## Beschreibung

Die Erfindung betrifft einen Halter für flache in etwa rechteckige Geräte wie Tablet-Computer oder Smartphones mit unterschiedlichen Außenabmessungen zum Anbringen an einem Bauteil, insbesondere an einem Bauteil eines Kraftfahrzeugs, gemäß dem Oberbegriff des Patentanspruchs 1.

Solche Halter sind von der Anmelderin in der WO 2014/068146, auf die verwiesen wird, beschrieben worden. Insbesondere die in den Fig. 78 bis 88 der erwähnten Anmeldung beschriebenen Halter sind an unterschiedliche Längen oder Breiten der aufzunehmenden Geräte anpassbar und umfassen eine in etwa rechteckige Aufnahmeschale mit einer Bodenwand und vier Seitenwänden die einen umlaufenden Schutzrand bilden sowie eine innerhalb des Schutzrands angeordnete Halterung mit einer auf einer Längsseite der Aufnahmeschale angeordneten U-förmigen Aufnahmetasche die eine Längskante eines in die Halterung eingesetzten Geräts umgreift und einer an einem verschiebbar gelagerten Schlitten angeordnete gefederten Halteklammer mit einem Niederhalter der die gegenüberliegende Längskante eines in die Halterung eingesetzten Geräts überdeckt.

Ein zwischen Aufnahmetasche und Halteklammer eingesetztes Gerät wird demnach auf zwei gegenüberliegenden Längsseiten klammerartig in der Halterung festgehalten, während die Seitenwände an den Schmalseiten der Aufnahmeschale seitliche Anschläge bilden, so dass das Gerät nicht seitlich aus der Halterung rutschen kann.

Ist die Lichtweite zwischen den Seitenwänden größer als die Länge des in den Halter eingesetzten Geräts entsteht ein Zwischenraum der insbesondere wenn das Gerät asymmetrisch in den Halter eingesetzt wird ästhetisch nicht befriedigt.

Zudem kann das Gerät bei seitlichen Beschleunigungen im Halter hin und her rutschen oder gar sich aus diesem heraus bewegen und nebst unangenehmen Geräuschen auch Beschädigungen oder im Extremfall bei einem Unfall gar Verletzungen bei Passagieren verursachen.

Zudem muss die Größe der Aufnahmeschale auf das jeweils größte aufzunehmende Gerät abgestimmt sein, so dass für kleinere Geräte unnötig viel Platz beansprucht wird.

Aus der US 2013/0318775 A1 ist ein anderer Halter für Smartphones bekannt, der eine Halterung und eine Schale zur Aufnahme eines Smartphones umfasst. Die Schale weist im mittleren Bereich ihrer Rückseite einen Kupplungsabschnitt zur bajonettartigen Befestigung der Schale an der Halterung auf. Die Anordnung einer Kupplung an der Rückwand der Schale führt zu einer massiven Verdickung der Rückwand. Zudem ist die lochartige Vertiefung ästhetisch und für die Handhabung unbefriedigend. Die punktuelle Befestigung der Schale mittig an der Rückwand führt, insbesondere bei Verwendung weicher Materialien, zu hoher Instabilität der Schale. Das Smartphone wird weder durch die Halterung noch durch die Schale festgehalten, was bei Verwendung des Halters in Kraftfahrzeugen zu gefährlichen Situationen führen kann. Die Schale verdeckt die Sicht auf die Kupplung, was das Anbringen der Schale massiv erschwert. Aus der US 2013/0200119 A1 ist ein weiterer Halter, gemäß dem Oberbegriff des Anspruchs 1, für Tablet-Computer bekannt, der eine Halterung und eine Schale zur Aufnahme eines Tablet-Computers umfasst.

Aufgabe der Erfindung ist es, einen Halter für unterschiedlich große, flache in etwa rechteckige Geräte wie Tablet-Computer oder Smartphones zu schaffen, mit dem unterschiedlich große Geräte auf einfache Art und Weise sicher gehaltert werden können und der einen hohen Schutz vor Verletzungen der Passagiere bei Unfällen gewährleistet.

Diese Aufgabe wird bei einem Halter der eingangs genannten Art erfindungsgemäß durch die kennzeichnenden Merkmale des Anspruchs 1 gelöst. Weiterbildungen der Erfindung sind in den abhängigen Ansprüchen definiert.

Die Erfindung zeichnet sich folglich dadurch aus, dass die Halterung einen Träger mit zwei an gegenüberliegenden Seiten angeordneten ersten Verbindungselementen umfasst, deren Abstand einstellbar und so an Halterahmen bzw. Hüllen mit unterschiedlichen Außenabmessungen anpassbar ist, und dass der Halterahmen an zwei gegenüberliegenden Rändern zweite Verbindungselemente aufweist, wobei die ersten und zweiten Verbindungselemente komplementär zueinander derart ausgebildet sind, dass bei in die Halterung eingesetztem Halterahmen die ersten Verbindungselemente und die zweiten Verbindungselemente zur gegenseitigen Fixierung ineinander greifen, so dass der Halterahmen nicht in der Halterahmenebene und/oder senkrecht zur Halterahmenebene aus der Halterung heraus bewegt werden kann.

Der Halterahmen ist damit sicher an der Halterung angebracht. Durch die komplementäre Ausbildung der ersten und zweiten Verbindungselemente kann ein heraus bewegen des Halterahmens sicher verhindert werden. Die komplementäre Ausbildung kann dabei durch eine entsprechende geometrische Ausbildung der Verbindungselemente realisiert werden; allerdings ist ebenfalls denkbar, dass sich eine komplementäre Ausbildung erst dann ergibt, wenn der Halterahmen in die Halterung eingesetzt wird. Dies kann beispielsweise dadurch erfolgen, dass das eine Verbindungselement das andere Verbindungselement verformt, eindrückt oder sich in dieses eingräbt. In diesem Zusammenhang ist denkbar, dass das eine Verbindungselement aus einem weichen und nachgiebigen Kunststoff- oder Schaumstoffmaterial besteht, das vom anderen Verbindungselement zum komplementären Ineinandergreifen eingedrückt wird, so dass der Halterahmen nicht in der Halterahmenebene und/oder senkrecht zur Halterahmenebene aus der Halterung heraus bewegt werden kann.

In einer bevorzugten Ausführungsform der Erfindung umfasst der Halter eine Halterung mit vorzugsweise klammerförmigen ersten Verbindungselementen mit denen ein am Tablet-Computer befestigter Halterahmen mit entsprechend ausgebildeten zweiten Verbindungselementen formschlüssig und lösbar verbunden werden kann.

In einer weiteren bevorzugten Ausführungsform weist der Halterahmen ein U-förmiges Profil auf und ist aus einem vorzugsweise weichen Material wie bspw. Silikon oder TPU gefertigt und umschließt vorzugsweise alle vier Stirnseiten des Tablet-Computers vollständig, weitestgehend oder abschnittsweise..

Der Halterahmen kann dabei zweiteilig ausgebildet sein, wobei dann je ein zweites Verbindungselement an je einem Halterahmen-Teil angeordnet ist.

In einer bevorzugten Weiterbildung ist der Halterahmen Teil einer den Tablet-Computer aufnehmenden Hülle mit einer Bodenwand sowie den Tablet-Computer vorzugsweise allseitig umschließenden Seitenwänden. Eine solche Hülle, die insbesondere eine Schutzhülle sein kann, bildet damit auch einen Halterahmen im Sinne der Erfindung.

Ferner ist vorteilhaft, wenn die Hülle auf mindestens zwei gegenüberliegenden Seiten Deckwände umfasst, die das Gerät im Randbereich seitlich des Bildschirms mindestens teilweise überdecken und/oder übergreifen.

Vorzugsweise ist die Hülle einstückig aus einem elastischen Material wie bspw. Silikon oder TPU gefertigt, so dass die Deckwände der Hülle vorzugsweise allseitig über den Randbereich der Monitor-Seite des Tablet-Computers gespannt werden können und die Hülle am Tablet-Computer stabil befestigt bzw. sicher von der Hülle aufgenommen werden kann.

In einer weiteren bevorzugten Ausführungsform sind die am Halterahmen bzw. an der Hülle angeordneten zweiten Verbindungselemente an den Rändern des Halterahmens bzw. der Hülle vom Rahmen bzw. der Hülle ausgebildet oder als separate Teile, vorzugsweise aus einem harten Kunststoff oder Metall, am Halterahmen bzw. der Hülle angeordnet oder in den Halterahmen bzw. die Hülle eingesetzt, verklebt, angeformt oder mit dem Halterahmen oder der Hülle anderweitig verbunden.

Die am Halterahmen bzw. an der Hülle angeordneten zweiten Verbindungselemente sind vorzugsweise als Ausnehmungen und/oder Erhebungen an zwei gegenüberliegenden Rändern des Halterahmens bzw. der Hülle ausgebildet.

Die zweiten Verbindungselemente können insbesondere Aufnahmen mit seitlichen Anschlägen für die an der Halterung angeordneten ersten, vorzugsweise klammerförmigen, Verbindungselemente bilden, so dass der Halterahmen bzw. die Hülle mit dem Tablet-Computer formschlüssig in der Halterung festgehalten wird und nicht seitlich aus der Halterung rutschen kann.

Um eine seitliche Verschiebung zu verhindern, können dabei in einer bevorzugten Weiterbildung die Ausnehmungen und/oder Erhebungen der ersten und zweiten Verbindungselemente als ineinandergreifende Verzahnungen ausgebildet sein, wobei die Anzahl der Zähne sowie deren Größe, Formen und Abstände je nach Anforderungen bezüglich Materialien, Krafteinwirkung und Ästhetik vorzusehen sind.

Bevorzugt sind die Ausnehmungen bzw. Vertiefungen und/oder Erhebungen bzw. Verzahnungen an den Rändern, also an den Stirnseiten und/oder im Randbereich der Vorder- und/oder Rückseite des Halterahmens bzw. der Hülle angeordnet.

In einer bevorzugten Weiterbildung sind die ersten Verbindungselemente klammerförmig ausgebildet und umgreifen den Halterahmen bzw. die Hülle in stirnseitig angeordneten Ausnehmungen auf der Rück-, Stirn- und/oder Vorderseite des Halterahmens bzw. der Hülle.

In einer weiteren bevorzugten Ausführungsform können die zweiten Verbindungselemente je nach Format der Tablet-Computer und Abmessungen des Halterahmens bzw. der Hülle an den beiden langen oder an den beiden kurzen Rändern des Halterahmens bzw. der Hüllen angeordnet sein.

In einer bevorzugten Weiterbildung sind die an zwei gegenüberliegenden Rändern des Halterahmens bzw. der Hüllen angeordneten zweiten Verbindungselemente in etwa mittig bezüglich der Länge der Ränder des Halterahmens bzw. der Hülle angeordnet und insbesondere symmetrisch mit identischen Konturen so ausgebildet, dass Tablet-Computer unterschiedlicher Formate mit Halterahmen bzw. Hüllen unterschiedlich langer Ränder eingemittet in der Halterung gehalten werden und insbesondere auch in 180° unterschiedlichen Lagen in die Halterung eingesetzt werden können.

In einer weiteren bevorzugten Ausführungsform umfasst der Halterahmen bzw. die Hülle, auf zwei gegenüberliegenden Seiten und vorzugsweise auf den beiden schmalen Seiten angeordnete, gegen den Innenraum der Hülle bzw. die Innenseite offene Aufnahmetaschen, welche zwei gegenüberliegende Ränder des Geräts insbesondere allseitig umschließen bzw. umgreifen.

Dabei ist vorteilhaft, wenn die zweiten Verbindungselemente an den beiden langen Rändern des Halterahmens bzw. der Hülle und die Aufnahmetaschen an den beiden kurzen Rändern des Halterahmens bzw. der Hülle angeordnet sind bzw. wenn die Aufnahmetaschen an den beiden langen Rändern des Halterahmens bzw. der Hülle und die zweiten Verbindungselemente an den beiden kurzen Rändern des Halterahmens bzw. der Hülle angeordnet sind.

Erfindungsgemäß ist vorgesehen, dass die Halterung zwei an gegenüberliegenden Seiten angeordnete erste Verbindungselemente umfasst, deren Abstand einstellbar und so an Halterahmen bzw. Hüllen mit unterschiedlichen Außenabmessungen anpassbar ist. Damit kann die Halterung sehr flexibel für unterschiedlich große Geräte Verwendung finden.

In einer weiteren bevorzugten Ausführungsform bilden die beiden Aufnahmetaschen und die beiden, insbesondere klammerförmigen, Verbindungselemente der Halterung gemeinsam einen den Tablet-Computer im Wesentlichen allseitig umgreifenden Rahmen, der ein Abschälen der Hülle vom Tablet-Computer, insbesondere in den Eckbereichen, und Freilegen der Gerätekanten im Falle eines Kopfaufschlags bei einem Unfall verhindert.

In einer bevorzugten Weiterbildung wird der Rand des Tablet-Computers außerhalb der beiden Abschnitte für die zweiten Verbindungselemente durch einen am Halterahmen oder an der Hülle angeordneten Schutzrand abgedeckt.

Ferner ist vorteilhaft, wenn die ersten Verbindungselemente klammerförmig ausgebildet sind und eine erste Halteklammer mit einem Niederhalter und eine zweite Halteklammer mit einem Niederhalter umfassen, welche in die zweiten Verbindungselemente eingreifen und/oder die zweiten Verbindungselemente umgreifen. Insbesondere durch die Niederhalter kann verhindert werden, dass der Halterahmen senkrecht zur Halterahmenebene aus der Halterung heraus bewegt werden kann.

In einer bevorzugten Weiterbildung sind die zweiten Verbindungselemente am Halterahmen bzw. an den Rändern der Hülle mit Einsätzen aus einem stabilen Material wie z.B. einem Hartkunststoff oder Metalldraht verstärkt. Bei Verwendung eines weichen Materials für den Halterahmen bzw. die Hülle kann so die Passgenauigkeit für die ersten Verbindungselemente der Halterung verbessert, die Stabilität und Abriebfestigkeit insbesondere gegenüber dem sich bewegenden Niederhalter verbessert und eine Beschädigung des Halterahmens bzw. der Hülle beim Einsetzen oder Entnehmen in oder aus der Halterung verhindert werden.

In einer bevorzugten Weiterbildung sind der Halterahmen bzw. die Hülle im Randbereich rundum so dimensioniert, dass sie einen wirksamen Schutz gegen Verletzungen von Passagieren im Fahrzeug durch den scharfkantigen Tablet-Computer sowie gegen Beschädigung des Tablet-Computers beim Hinunterfallen auf den Boden bilden.

Der Halterahmen bzw. die Hülle sind vorzugsweise möglichst dünn und flach und ohne überstehende Elemente ausgebildet, so dass sie auch bei Verwendung der Tablet-Computer außerhalb von Fahrzeugen nicht stören und als Schutzrand bzw. Schutzhülle am Tablet-Computer angebracht bleiben, womit das Anbringen und Entfernen des Halterahmens bzw. der Hülle beim Gebrauch der Tablet-Computer mit oder ohne Halterung entfällt.

Gemäß der Erfindung kann vorgesehen sein, dass die erste Halteklammer fest am Träger und die zweite Halteklammer an einem im oder am Träger gelagerten ausziehbaren Schlitten angeordnet sind. Damit kann insbesondere der Abstand zwischen den beiden Halteklammern verstellt und an die Größe des Geräts angepasst werden.

Der Schlitten kann dabei parallel zur Längsachse X - X des Trägers verstellbar gelagert und in unterschiedlichen Positionen mit einer Arretiervorrichtung feststellbar sein. Die Arretiervorrichtung kann dabei mit einer an der Stirnwand der zweiten Halteklammer zugänglichen Taste lösbar sein.

In einer weiteren bevorzugten Ausführungsform kann an Stelle einer festen Halteklammer auch eine zweite - vorzugsweise als zweiter Schlitten ausgebildete - bewegliche Halteklammer am Träger angeordnet sein, wobei die beiden Schlitten vorzugsweise übereinander liegend im Träger geführt sind und mittels an den beiden Schlitten angeordneten Zahnstangen nach bekannter Bauart über ein Zahnrad synchron und gegenläufig bewegbar sind.

An dem der ersten Halteklammer abgewandten Ende des Schlittens kann eine Stützwand angeordnet sein, die einen festen Anschlag für das Gerät mit Halterahmen oder Hülle bildet. Das Gerät kann dadurch folglich positionsgenau in die Halterung eingesetzt werden.

Vorteilhaft ist zudem, wenn die zweite Halteklammer parallel zur Längsachse X - X bewegbar im oder am Schlitten gelagert und mit einer Feder gegen die Stützwand vorgespannt ist, so dass der Niederhalter der Halteklammer über die Stützwand ragt und den Rand des Halterahmens oder der Hülle mit dem in die Halterung eingesetzten Gerät überdeckt. Dadurch kann ein einfaches, schnelles und funktionssicheres Einsetzen und Entnehmen des Geräts in die Halterung bzw. aus der Halterung gewährleistet werden.

Vorzugsweise sind am Träger und am Schlitten keilförmige Rampen angeordnet, die ein in die Halterung eingesetztes Gerät mit Halterahmen oder Hülle beim gegeneinander Schieben von Schlitten und Träger soweit anheben, bis der Halterahmen oder die Hülle an den beiden Niederhaltern anstehen.

Die Rückwand und der Niederhalter der ersten Halteklammer und die Stützwand sowie der Niederhalter der zweiten Halteklammer umgreifen vorzugsweise die Ausnehmungen am Halterahmen bzw. an der Hülle mit dem Gerät.

Zudem ist vorteilhaft, wenn der Halterahmen oder die Hülle mit dem Gerät von der Rampe sowie der Rückwand und dem Niederhalter an einem Rand und von der Rampe der Stützwand und dem Niederhalter am gegenüberliegenden Rand im Bereich der Ausnehmungen umgriffen und allseitig abgestützt werden.

Zur einfachen Montage ist vorteilhaft, wenn die Halterung über eine lösbare Kupplung mit einem Steckelement an der Halterung und einer Aufnahmebuchse am Bauteil mit dem Bauteil verbunden werden kann.

Die Größe des Halters wird somit weitgehend durch die Größe des in die Halterung eingesetzten Geräts mit Halterahmen bzw. Hülle bestimmt, während die Größe der Halterung ohne Gerät sehr klein und kompakt ist.

Weitere Vorteile und Ausgestaltungen der Erfindung ergeben sich aus der Beschreibung und den beiliegenden Zeichnungen.

Es versteht sich, dass die vorstehend genannten und nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Die beschriebenen und nachstehend noch zu erläuternden Merkmale und Ausführungsformen haben sowohl für "Tablet-Computer" wie auch für Smartphones" oder ähnliche Geräte Gültigkeit, auch wenn nicht jedes Mal ausdrücklich darauf hingewiesen wird.

Die Erfindung wird nachstehend anhand von bevorzugten Ausführungsbeispielen unter Bezugnahme auf die zugehörigen Zeichnungen näher erläutert.
Fig. 1a zeigt eine Perspektivansicht einer ersten Ausführungsform einer Halterung für einen Tablet-Computer mit Hülle, mit einem Träger und einer am Träger fest angeordneten Halteklammer sowie einem im Träger verstellbar gelagerten Schlitten und einer im Schlitten beweglich gelagerten Halteklammer mit dem Schlitten und der beweglichen Halteklammer in den eingefahrenen Positionen.
Fig. 1b zeigt eine Perspektivansicht der Halterung gemäß Darstellung in Fig. 1a, mit dem Schlitten in einer ausgefahrenen Zwischenstellung.
Fig. 1c zeigt eine Perspektivansicht der Halterung gemäß Darstellung in Fig. 1b mit der beweglichen Halteklammer in der geöffneten Stellung zum Einsetzen oder Entnehmen eines Tablet-Computers mit Hülle.
Fig. 2a zeigt eine Draufsicht von vorne auf die Halterung gemäß Darstellung in Fig. 1c.
Fig. 2b zeigt eine Draufsicht von vorne auf eine Hülle mit eingesetztem Tablet-Computer.
Fig. 3a zeigt eine Draufsicht von vorne eines in eine Halterung gemäß Darstellung in Fig. 2a eingesetzten Tablet-Computers mit Hülle gemäß Darstellung in Fig. 2b.
Fig. 3b zeigt eine Draufsicht von hinten eines in eine Halterung gemäß Darstellung in Fig. 2a eingesetzten Tablet-Computers mit Hülle gemäß Darstellung in Fig. 2b.
Fig. 4a zeigt eine Draufsicht von vorne eines in eine Halterung eingesetzten Smartphones mit Hülle.
Fig. 4b zeigt eine Draufsicht von hinten eines in eine Halterung eingesetzten Smartphones mit Hülle gemäß Darstellung in Fig. 4a.
Fig. 4c zeigt eine Seitenansicht eines in eine Halterung eingesetzten Smartphones mit Hülle gemäß Darstellung in Fig. 4a.
Fig. 5a zeigt eine Perspektivansicht von vorne einer weiteren Ausführungsform einer Halterung für ein Tablet-Computer mit Hülle mit einem Träger und einer am Träger fest angeordneten Halteklammer sowie einem im Träger verstellbar gelagerten Schlitten und einer im Schlitten beweglich gelagerten Halteklammer mit dem Schlitten und der beweglichen Halteklammer in ausgefahrenen Positionen.
Fig. 5b zeigt eine Perspektivansicht der Halterung gemäß Darstellung in Fig.5a von hinten.
Fig. 6a zeigt eine Draufsicht von vorne einer Hülle mit eingesetztem Tablet-Computer.
Fig. 6b zeigt eine Draufsicht von hinten auf die Hülle gemäß Darstellung in Fig. 6a.
Fig. 7 zeigt eine Perspektivansicht des in den Fig. 6a, 6b dargestellten Tablet-Computers mit Hülle eingesetzt in die in den Fig. 5a, 5b dargestellte Halterung.
Fig. 8 zeigt eine Perspektivansicht eines Smartphones mit entsprechend verkleinerter Hülle gemäß Bauweise von Fig. 6a, 6b, eingesetzt in eine entsprechend verkleinerte Halterung gemäß Bauweise von Fig. 5a, 5b.
Fig. 9 zeigt eine Perspektivansicht einer weiteren Ausführungsform einer Hülle.
Fig. 10a zeigt eine Schnittdarstellung A-A gem. Darstellung von Fig. 9.
Fig. 10b zeigt eine Schnittdarstellung B-B gem. Darstellung von Fig. 9.
Fig. 11a zeigt ein Einsatz zum Verstärken von an den Längsseiten der Hülle angeordneten Ausnehmungen.
Fig. 11b zeigt den in die Hülle eingesetzten Einsatz gem. Darstellung in Fig. 11a.
Fig. 12 zeigt eine Perspektivansicht einer weiteren Ausführungsform einer Halterung für einen Tablet-Computer mit Hülle mit einem Träger und einer am Träger fest angeordneten Halteklammer sowie einem im Träger verstellbar gelagerten Schlitten und einer im Schlitten beweglich gelagerten Halteklammer mit dem Schlitten in der ausgefahrenen Position und der beweglichen Halteklammer in der geöffneten Position zum Einsetzen und Entnehmen eines Tablet-Computers mit Hülle.
Fig. 13 zeigt eine Ansicht von vorne der Halterung von Fig. 12 mit dem Schlitten in einer Zwischenstellung und der Halteklammer in der geschlossenen Position.
Fig. 14 zeigt eine Seitenansicht der Halterung gemäß Darstellung in Fig. 13.
Fig. 15 zeigt eine Längsschnittansicht der Halterung von Fig. 12 bis 14 mit einer weiteren Variante einer Arretiervorrichtung für den Schlitten in der Blockierstellung.
Fig. 16 zeigt eine Längsschnittansicht der Halterung gemäß Darstellung in Fig. 15 mit der Arretiervorrichtung des Schlittens in der Freigabestellung.
Fig. 17 zeigt eine perspektivische Explosionsansicht der Arretiervorrichtung von Fig. 15 und Fig. 16.
Fig. 18 zeigt eine Ansicht von vorne auf eine weitere Variante einer Hülle für einen Tablet-Computer.
Fig. 19 zeigt eine Seitenansicht der Hülle von Fig. 18.
Fig. 20 zeigt eine Ansicht von hinten auf die Hülle von Fig. 18 und Fig. 19
Fig. 21 zeigt eine Perspektivansicht der Hülle von Fig. 18 bis Fig. 20 von vorne.
Fig. 22 zeigt eine Perspektivansicht der Hülle gemäß Darstellung von Fig. 21 von vorne, gedreht um 180°.
Fig. 23 zeigt eine perspektivische Explosionsansicht des Halters mit einer Halterung und einer Hülle sowie eines Tablet-Computers.
Fig. 24 zeigt eine Ansicht des Halters gemäß Fig. 23 mit in die Halterung eingesetztem Tablet-Computer mit Hülle von vorne.
Fig. 25 zeigt eine Ansicht des Halters gemäß Fig. 24 von hinten.
Fig. 26 zeigt eine Perspektivdarstellung des Halters gemäß Darstellungen von Fig. 23 bis Fig. 25 von hinten.
Fig. 27 zeigt eine Perspektivdarstellung des Halters gemäß Darstellung von Fig. 26 von vorne.
Fig. 28 zeigt eine Ansicht von hinten einer weiteren Variante einer Hülle mit einer eingeklappten Stützleiste.
Fig. 29 zeigt eine Seitenansicht der Hülle von Fig. 28 mit ausgeklappter Stützleiste in einer ersten Position.
Fig. 30 zeigt eine Seitenansicht der Hülle von Fig. 28 mit ausgeklappter Stützleiste in einer zweiten Position.
Fig. 31 zeigt eine Perspektivansicht von vorne einer weiteren Ausführungsform einer Halterung, die drehbar an einem Stützelement einer Befestigungsvorrichtung angeordneten ist, in vertikaler Stellung mit dem Schlitten in eingefahrener Position.
Fig. 32 zeigt eine Ansicht der Halterung gemäß Darstellung in Fig. 31 mit dem Schlitten in ausgefahrener Position.
Fig. 33 zeigt eine Frontansicht eines Tablet-Computers mit Hülle in Querformatstellung und Verbindungselementen in Form von Ausnehmungen an den beiden langen Rändern der Hülle.
Fig. 34 zeigt eine Frontansicht eines Tablet-Computers mit Hülle in Hochformatstellung und Verbindungselementen in Form von Ausnehmungen an den beiden kurzen Rändern der Hülle.
Fig. 35 zeigt eine Frontansicht der Vorrichtung mit Tablet-Computer und Hülle in der Querformatstellung gemäß Darstellung in Fig. 33 eingesetzt in die vertikal ausgerichtete Halterung mit eingefahrenem Schlitten gemäß Darstellung in Fig. 31.
Fig. 36 zeigt eine Frontansicht der Vorrichtung mit Tablet-Computers und Hülle in der Hochformatstellung gemäß Darstellung in Fig. 34 eingesetzt in die vertikal ausgerichtete Halterung mit ausgefahrenem Schlitten gemäß Darstellung in Fig. 32.
Fig. 37 zeigt eine Frontansicht der Vorrichtung gemäß Darstellung in Fig. 35 mit horizontal ausgerichteter Halterung und Tablet-Computer mit Hülle in der Hochformatstellung.
Fig. 38 zeigt eine Frontansicht der Vorrichtung gemäß Darstellung in Fig. 36 mit horizontal ausgerichteter Halterung und Tablet-Computer mit Hülle in der Querformatstellung.
Fig. 39 zeigt eine Draufsicht einer weiteren Variante einer Halterung
Fig. 40 zeigt eine Seitenansicht der Halterung gemäß Darstellung in Fig. 39.
Fig. 41 zeigt einen Querschnitt einer Detailansicht der Hülle mit Tablet-Computer gemäß Darstellung in Fig. 33.
Fig. 42 zeigt einen Querschnitt einer Detailansicht der Hülle mit Tablet-Computer, eingesetzt in die Halterung gemäß Darstellung in Fig. 35.
Fig. 43 zeigt eine Draufsicht auf die Vorderseite einer Hülle mit einer alternativen Ausbildung der zweiten Verbindungselemente an den beiden Längskanten.
Fig. 44 zeigt eine Draufsicht auf die Vorderseite einer Hülle mit einer alternativen Ausbildung der zweiten Verbindungselemente an den beiden Querkanten.
Fig. 45 zeigt eine teilweise geschnittene Draufsicht auf die Vorderseite der Hülle gemäß Darstellung von Fig. 43 mit einer an die Verbindungselemente angepassten Halterung (teilweise geschnitten).
Fig. 46a zeigt eine Draufsicht von vorne auf einen einteiligen Halterahmen.
Fig. 46b zeigt eine Draufsicht von hinten auf den Halterahmen gemäß Darstellung von Fig. 46a.
Fig. 47a zeigt eine Draufsicht von vorne auf einen zweiteiligen Halterahmen, aufgesetzt auf einen Tablet-Computer.
Fig. 47b zeigt eine Draufsicht von hinten auf den Halterahmen gemäß Darstellung von Fig. 47a.
Fig. 48 zeigt einen Querschnitt des Halterahmens gemäß Darstellung von Fig. 46a.
Fig. 49 zeigt einen Querschnitt des Halterahmens gemäß Darstellung von Fig. 47a.
Fig. 50a zeigt eine erste Ausführungsform eines Smartphone-Halters zum Anbringen an einer Windschutzscheibe eines Kraftfahrzeugs mit einem Vakuum-Sauger in einer vertikal aufgerichteten Gebrauchsstellung mit gegen den Fahrer gerichtetem Bildschirm.
Fig. 50b zeigt den Smartphone-Halter gem. Darstellung von Fig. 50a in einer horizontalen Nichtgebrauchslage mit gegen den Trägerarm gerichtetem Bildschirm.
Fig. 51 zeigt eine Seitenansicht des Smartphone-Halters gemäß Darstellung von Fig. 50b, befestigt an einer Windschutzscheibe eines Kraftfahrzeugs.
Fig. 52 zeigt einen Smartphone-Halter gem. Bauweise von Fig. 50a bis 51 mit einem Standfuß zum Anbringen des Halters auf einer ebenen Fläche.
Fig. 53a zeigt eine perspektivische Ansicht einer weiteren Ausführungsform einer Halterung in Gebrauchsstellung.
Fig. 53b zeigt den Halter gemäß Fig. 53a in Nichtgebrauchsstellung.
Fig. 54 zeigt eine Seitenansicht des Halters gemäß Fig. 53b.
Fig. 55a zeigt eine weitere perspektivische Ansicht des Halters gemäß Fig. 53a.
Fig. 55b zeigt den Halter gemäß Fig. 55a mit daran angeordnetem Tablet-Computer mit Hülle.
Fig. 56a zeigt eine perspektivische Ansicht einer weiteren Ausführungsform eines Halters in Gebrauchsstellung.
Fig. 56b zeigt den Halter gemäß Fig. 56a in Nichtgebrauchsstellung.
Fig. 57 zeigt eine Seitenansicht des Halters gemäß Fig. 56b.
Fig. 58a zeigt eine weitere perspektivische Ansicht des Halters gemäß Fig. 56a.
Fig. 58b zeigt den Halter gemäß Fig. 56a mit daran angeordnetem Tablet-Computer mit Hülle.
Fig. 59a zeigt eine perspektivische Ansicht einer weiteren Ausführungsform eines Halters in Gebrauchsstellung.
Fig. 59b zeigt den Halter gemäß Fig. 59a in Nichtgebrauchsstellung.
Fig. 60 zeigt eine Seitenansicht des an einer Aufnahmebuchse befestigten Halters in Nichtgebrauchsstellung.
Fig. 61a zeigt eine weitere perspektivische Ansicht des Halters gemäß Fig. 59a.
Fig. 61b zeigt den Halter gemäß Fig. 59a mit daran angeordnetem Tablet-Computer mit Hülle.

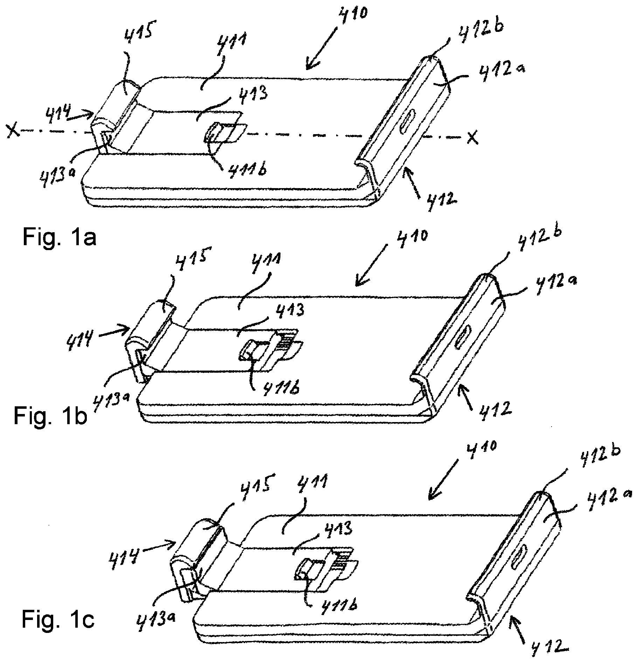

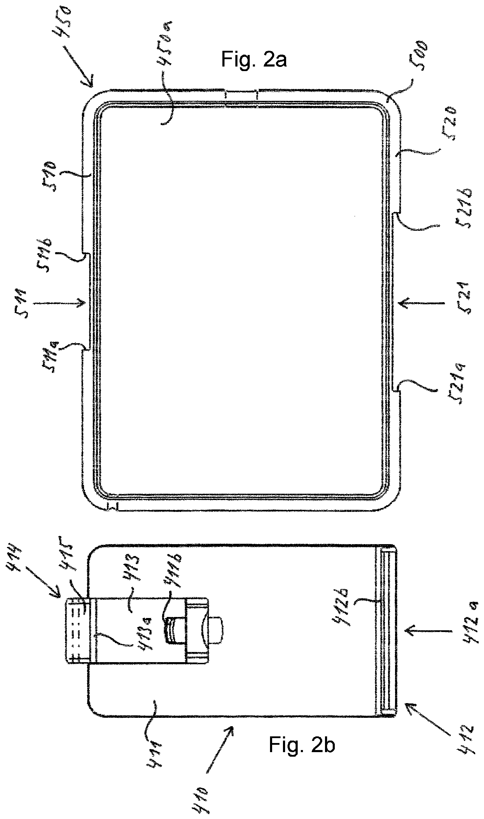

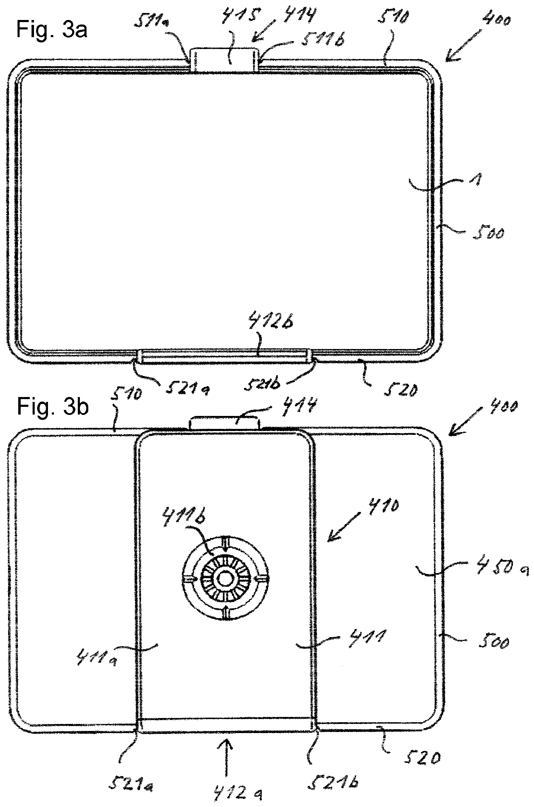

Die Figuren 1a bis 3b zeigen eine erste Ausführungsform der Erfindung umfassend einen Halter 400 mit einer Halterung 410 für einen mit einem Halterahmen 500 bzw. einer Hülle 450 versehenen Tablet-Computer 1, mit einem Träger 411 und einer am Träger 411 fest angeordneten Halteklammer 412, 412a mit einem Niederhalter 412b, die einen Rand des Halterahmens 500 bzw. der Hülle 450 des Tablet-Computers 1 umgreift, sowie einem im Träger 411 parallel zur Längsachse X - X verstellbar gelagerten und in unterschiedlichen Positionen feststellbaren Schlitten 413 mit einem festen Anschlag in Form der Stützwand 413a für den gegenüberliegenden Rand des Halterahmens 500 bzw. der Hülle 450 des Tablet-Computers 1.

Im Schlitten 413 ist eine parallel zur Längsachse X - X linear verschiebbare bewegliche Halteklammer 414 mit einem Niederhalter 415 angeordnet, die mit einer Feder gegen den festen Anschlag 413a am Schlitten 413 vorgespannt ist und den gegenüberliegenden Rand des Halterahmens 500 bzw. der Hülle 450 des in die Halterung 410 eingesetzten Tablet-Computers 1 umgreift.

Aufbau und Funktionsprinzip der Halterung 410 entsprechen der Beschreibung der eingangs genannten WO 2014/068146 (insbesondere Fig. 78 bis Fig.88), auf die verwiesen wird.

Zur lösbaren Befestigung des Tablet-Computers 1 in der Halterung 410 ist ein, vorzugsweise aus einem elastischen Material gefertigter Halterahmen 500 oder eine Hülle 450 mit einem integrierten Halterahmen 500 vorgesehen, welche die Bodenwand und/oder die Seitenränder des Tablet- Computers 1 umschließen.

An zwei gegenüberliegenden Rändern 510, 520 des Halterahmens 500 bzw. der Hülle 450 sind mittig Ausnehmungen 511, 521 vorgesehen, in welche die Rückwand 412a der Halteklammern 412 sowie die Stützwand 413a am Schlitten 413 und die Seitenwände 414a', 414a" der Halteklammer 414 eingreifen.

Der Niederhalter 412b der Halteklammer 412 und der Niederhalter 415 der Halteklammer 414 umgreifen die Seitenkanten und überdecken den Rand des Halterahmens 500 bzw. der Hülle 450 des Tablet-Computers 1, so dass dieser nicht nach oben aus der Halterung 410 fallen kann.

Die seitlichen Stirnwände 511a, 511b der Ausnehmung 511 und die seitlichen Stirnwände 521a, 521b der Ausnehmung 521 am Halterahmen 500 bzw. der Hülle 450 bilden seitliche Anschläge für die Rückwand 412a der Halteklammer 412 sowie für die Stützwand 413a am Schlitten 413 bzw. die Seitenwände 414a', 414 a" der Halteklammer 414, so dass der Tablet-Computer 1 formschlüssig in der Halterung 410 gehalten ist und nicht seitlich aus der Halterung 410 rutschen kann.

Die Ausnehmungen 511 und 521 am Halterahmen 500 bzw. der Hülle 450 sind mittig angeordnet, so dass der Tablett-Computer 1 in der Halterung 410 zentriert ist.

An der Rückwand 411a des Trägers 411 ist ein Konus 411d eines Drehlagers angeordnet mit dem die Halterung 410 zwischen Hoch- und Querformat drehbar mit einer (nicht dargestellten) Befestigungseinrichtung verbunden ist.

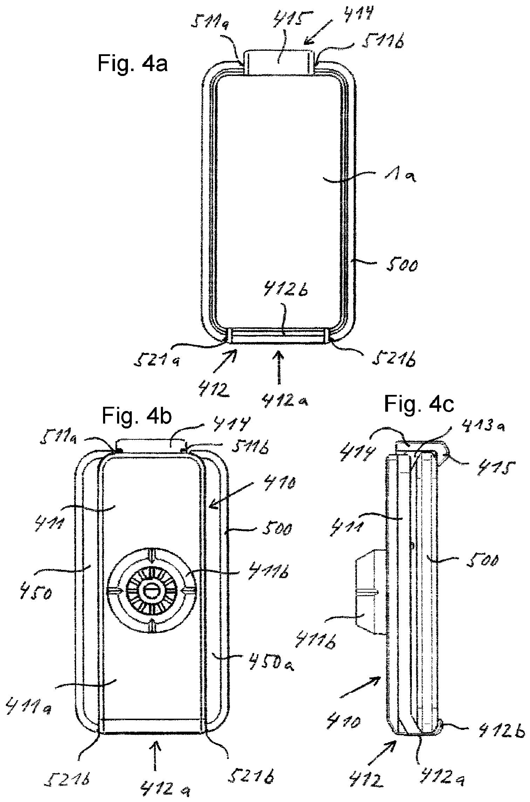

Die Figuren 4a bis 4c zeigen eine Halterung 410 sowie eine Hülle 450 mit integriertem Halterahmen 500 entsprechend verkleinert zur Aufnahme eines Smartphones 1a, jedoch mit identischer Bauweise wie die in den 1a bis 3b beschriebenen Ausführungsbeispiele, wobei die beiden Ausnehmungen 511, 511a, 511b und 521, 521a, 521b für die Halteklammern 414, 412 an den beiden kurzen Rändern des Halterahmens 500 angeordnet sind.

Zum besseren Verständnis sind Bauteile mit identischen Funktionen mit gleichen Bezugszeichen wie in den 1a bis 3b versehen, auch wenn sie abweichend ausgebildet sind.

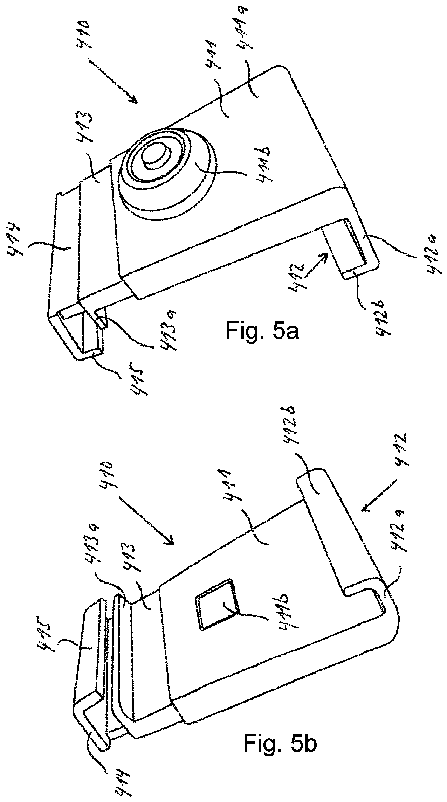

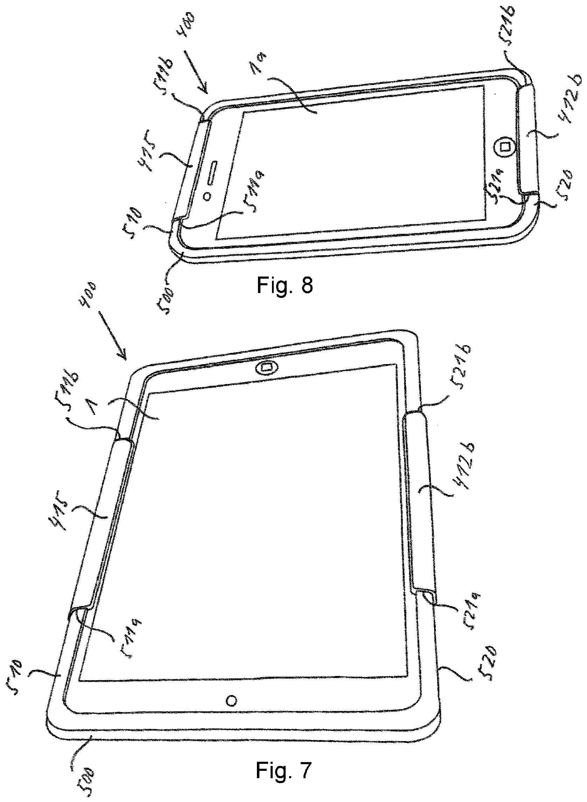

Figuren 5a bis 8 zeigen eine weitere Ausführungsform einer Halterung 410 für einen Tablet-Computer (Fig. 5a - 7) und für ein Smartphone (Fig. 8) mit ebenfalls identischer Bauweise wie die in den Fig. 1a bis 3b beschriebenen Ausführungsbeispiele.

Zum besseren Verständnis sind auch hier Bauteile mit identischen Funktionen mit gleichen Bezugszeichen wie in den Fig. 1a bis 3b versehen, auch wenn sie abweichend ausgebildet sind.

Die fest am Träger 411 angeordnete Halteklammer 412 sowie der im Träger 411 geführte Schlitten 413 mit der Stützwand 413a und die beweglich im Schlitten 413 geführte Halteklammer 414 mit dem Niederhalter 415 haben in etwa dieselbe Breite (Fig. 5a und Fig. 5b).

Entsprechend sind auch die an den gegenüberliegenden Rändern 510, 520 des Halterahmens 500 angeordneten Ausnehmungen 511, 521 gleich breit, so dass der Tablet-Computer 1 mit der Hülle 450 in 180° unterschiedlichen Lagen in die Halterung 410 eingesetzt werden kann.

An der Außenseite der Bodenwand 450a der Hülle 450 ist eine mittig angeordnete Ausnehmung 451 zur Aufnahme des Trägers 411 vorgesehen. Die Seitenränder 451 a, 451b der Ausnehmung 451 bilden zusätzliche Anschläge, damit die Hülle 450 nicht seitlich aus der Halterung 410 rutschen kann.

Die an der Innenseite des Trägers 411 angeordnete Lösetaste 411b dient zum Lösen der Verriegelung des Schlittens 413 im Träger 411, so dass der Schlitten 413 im Träger 411 verschoben werden kann.

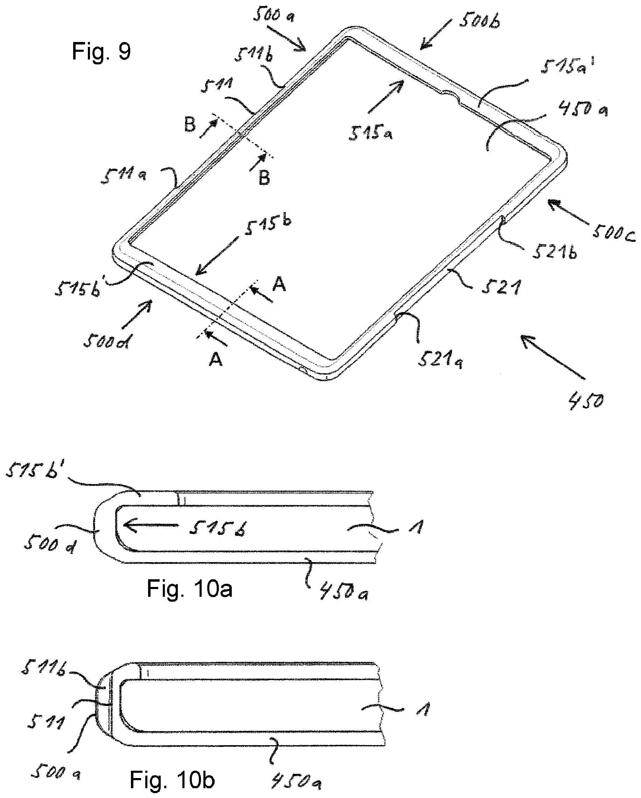

Figuren 9 bis 11b zeigen eine weitere Ausführungsform einer einteiligen Hülle 450 mit einer Bodenwand 450a, zwei langen Seitenwänden 500a, 500c, zwei kurzen Seitenwänden 500b, 500d sowie an den kurzen Seitenwänden 500b, 500d angeordneten Deckwänden 515a', 515b'.

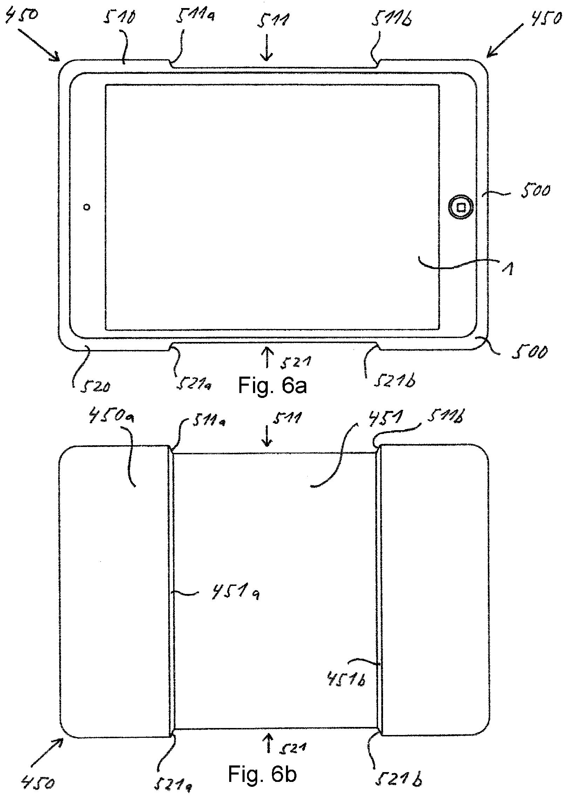

Die kurzen Seitenwände 500b, 500d und die Deckwände 515a', 515b' bilden gemeinsam mit den Enden der langen Seitenwände 500a, 500c sowie den Enden der Bodenwand 450a gegen den Innenraum der Hülle 450 offene Aufnahmetaschen 515a, 515b, welche die seitlich vom Bildschirm des Tablet-Computers 1 angeordneten Gehäuseabschnitte 1', 1" (Fig. 6a) allseitig umschließen (Fig. 10a).

In der Mitte der langen Seitenwände 500a, 500c der Hülle 450 sind die Ausnehmungen 511, 511a, 511b und 521, 521a, 521b (Fig. 10b) angeordnet, in welche die klammerförmigen Verbindungselemente 412, 412a, 412b, 413a, 414, 414a', 414a", 415 (Fig. 1a, 5a, 5b) der Halterung 410 eingreifen.

Die klammerförmigen Verbindungselemente 412, 412a, 412b, 413a, 414, 414a', 414a" 415 der Halterung 450 in den beiden Ausnehmungen 511, 511a, 511b und 521, 521a, 521b in den langen Seitenwänden 500a, 500c der Hülle 450 und die Aufnahmetaschen 515a, 515b an den kurzen Seitenwänden 500b, 500d der Hülle 450 bilden gemeinsam einen den Tablet-Computer 1 im Wesentlichen allseitig umgreifenden Halterahmen, der eine stabile Verbindung zwischen der Halterung 410 und dem Tablet-Computer 1 bildet und ein Abschälen der Hülle 450 vom Tablet-Computer 1 auch in den Eckbereichen verhindert.

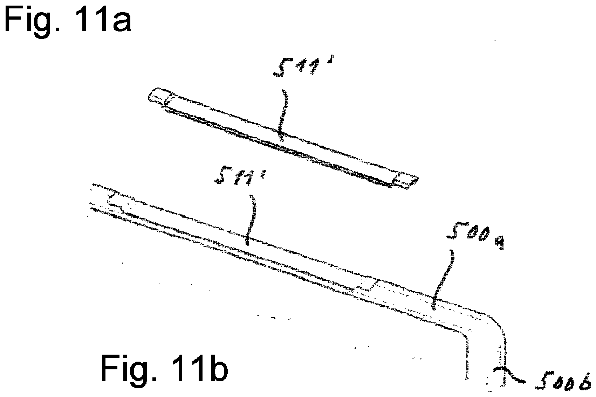

Die beiden Ausnehmungen 511, 511a, 511b und 521, 521a, 521b an der Hülle 450 sind mit konturfolgenden, komplementär zu den Ausnehmungen 511, 511a, 511b und 521, 521a, 521b ausgebildeten Einsätzen 511' aus einem stabilen Material, wie z.B. einem Hartkunststoff verstärkt (Fig. 11a, 11b).

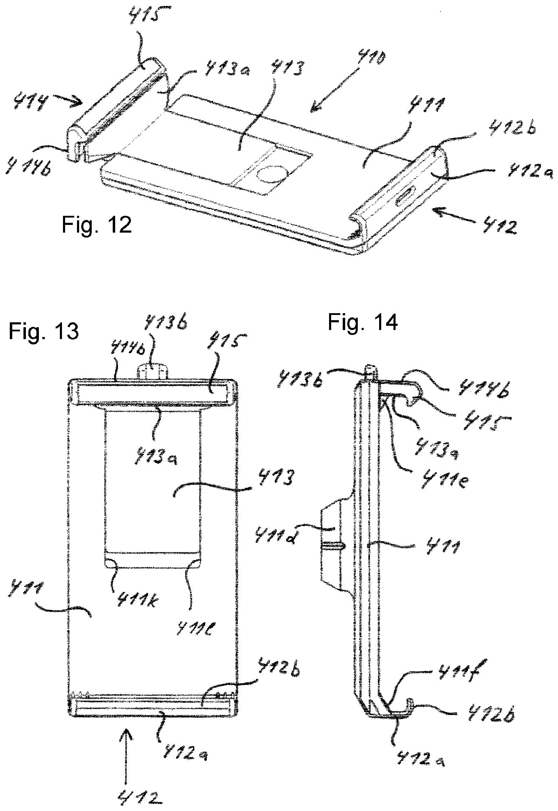

Figuren 12 bis 17 zeigen eine weitere Ausführungsform einer Halterung 410 für einen Tablet-Computer 1 in einer Hülle 450 (Fig. 9), mit einem Träger 411 und einer am Träger 411 fest angeordneten Halteklammer 412, die in der ersten Ausnehmung 511 einen Rand der Hülle 450 mit dem Tablet-Computer 1 umgreift, sowie einem im Träger 411 verstellbar gelagerten und in unterschiedlichen Positionen feststellbaren Schlitten 413 mit einem festen Anschlag in Form einer Stützwand 413a, die in die zweite Ausnehmung 521 am gegenüberliegenden Rand der Hülle 450 des Tablet-Computers 1 eingreift.

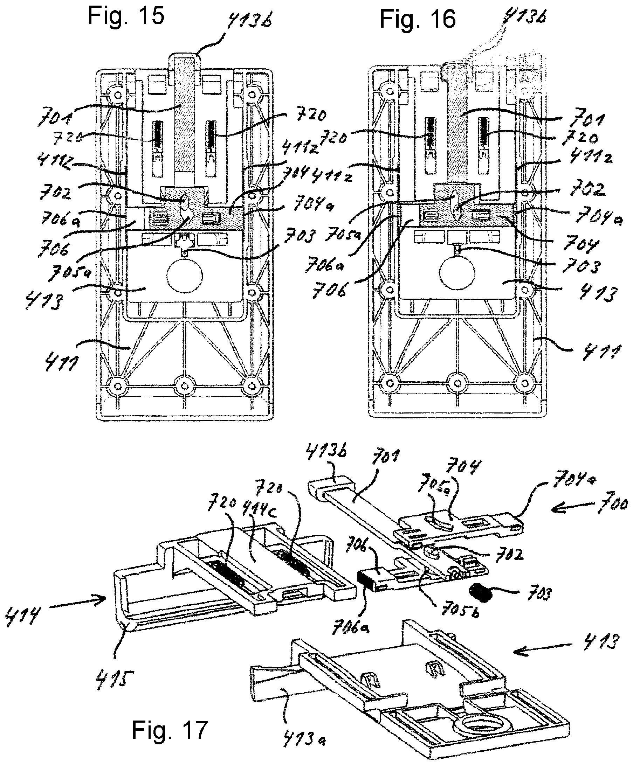

Im Schlitten 413 ist eine linear verschiebbare Halteklammer 414 mit einem Niederhalter 415 angeordnet, die den gegenüberliegenden Rand der Hülle 450 des Tablet-Computers 1 umgreift und die mit zwei Federn 720 (Fig. 17) gegen die Rückseite der Stützwand 413a am Schlitten 413 vorgespannt ist.

Zum Anheben unterschiedlich langer Tablet-Computer 1 unter die Niederhalter 412b, 415 sind am Träger 411 und am Schlitten 413 keilförmige Rampen 411f, 411e (Fig. 14) angeordnet, welche den in die Halterung 410 eingesetzten Tablet-Computer 1 mit Hülle 450 beim gegeneinander Schieben von Schlitten 413 und Träger 411 soweit anheben, bis die Hülle 450 an den Niederhaltern 412b, 415 ansteht.

Aufbau und Funktionsprinzip der Halterung 410 entsprechen der Beschreibung zu den in den Fig. 1a bis 2a und Fig.5a bis 5b gezeigten Halterungen 410, auf die verwiesen wird.

Im Unterschied zu den dort gezeigten Rastgesperren zum Blockieren des Schlittens 9, 413 mit einer an der Bodenplatte des Schlittens 9, 413 oder am Träger 411 angeordneten Lösetaste 9b, 411b zum Deblockieren des Schlittens 9, 413 wird in der Ausführungsform gemäß Figuren12 bis 17 eine Arretiervorrichtung 700 vorgeschlagen, welche die Bewegungen des Schlittens 413 in beiden Bewegungsrichtungen blockiert und die über eine an der Stirnwand 414b der Halteklammer 414 angeordnete Öffnung zugängliche Taste 413b gelöst werden kann.

Die Funktion der Arretiervorrichtung 700 wird anhand Fig.15 bis 17 näher erläutert. Der Schlitten 413 wird in Schlittenführungen 411k, 411l (Fig. 13) im Träger 411 geführt. An den Schlittenführungen 411k, 411l sind gegeneinander gerichtete Zahnschienen 411z angebracht.

Mittig und parallel zu den Schlittenführungen 411k, 411l ist eine Schubstange 701 längsverschiebbar in der Bodenplatte 414c der Halteklammer 414 geführt. Am äußeren Ende der Schubstange 701 ist eine kappenförmige Taste 413b angebracht, mit der die Schubstange 701 gegen die Kraft der Schubstangen-Feder 703 nach innen gedrückt werden kann.

Im Schlitten 413 sind zwei quer zur Schubstange 701 beweglich geführte Sperrriegel 704, 706 übereinander angeordnet, die mit Steuernuten 705a, 705b versehen sind, in die ein an der Schubstange 701 angebrachter Steuernocken 702 eingreift.

Die beiden Sperrriegel 704, 706 sind an ihren gegen die Zahnschienen 411z gerichteten Enden mit Zahnsegmenten 704a, 706a versehen, welche in die Zahnschienen 411z eingreifen, wenn die Schubstange 701 in der äußeren inaktiven Position steht.

Wird die Schubstange 701 mit der Taste 413b nach innen gedrückt werden die beiden Sperrriegel 704, 706 g mit dem Steuernocken 702 gegeneinander bewegt und die Zahnsegmente 704a, 706a außer Eingriff mit den Zahnschienen 411k, 411l gebracht, so dass der Schlitten 413 in beide Richtungen frei beweglich ist.

Beim Loslassen der Taste 413b werden die beiden Sperrriegel 704, 706 g mit dem Steuernocken 702 durch Krafteinwirkung der Schubstangen-Feder 703 auseinander bewegt und die Zahnsegmente 704a, 706a in Eingriff mit den Zahnschienen 411k, 4111l gebracht, so dass der Schlitten 413 in beide Richtungen blockiert ist.

Die Steuernuten 705a, 705b und der Steuernocken 702 sind so ausgebildet, dass die Sperrriegel 704, 706 in der Sperrposition mechanisch verriegelt sind und sich nicht gegeneinander bewegen können.

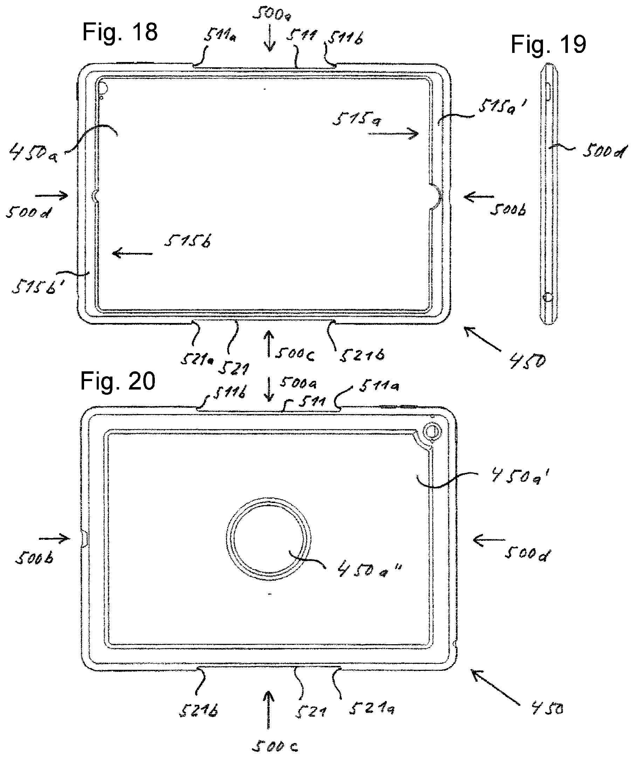

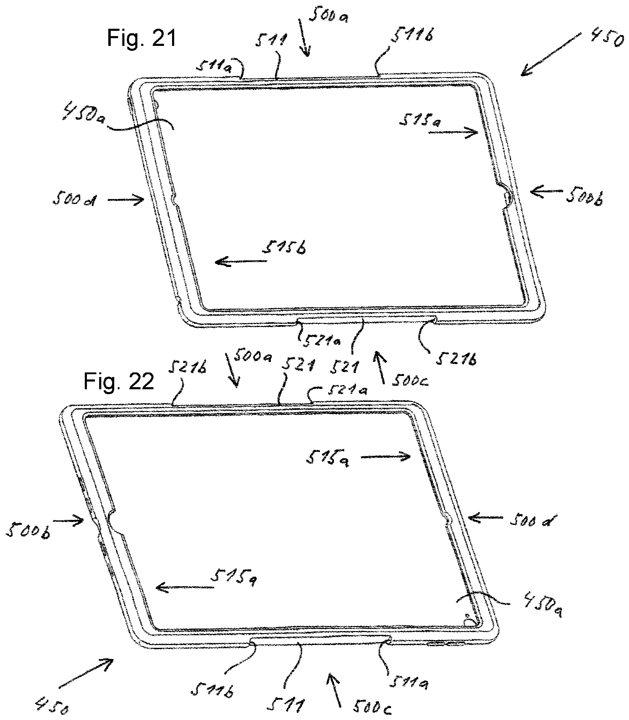

Die Figuren 18 bis 22 zeigen eine weitere Ausführungsform einer Hülle 450 mit einer Bodenwand 450a, zwei langen Seitenwänden 500a, 500c, zwei kurzen Seitenwänden 500b, 500d sowie an den kurzen Seitenwänden 500b, 500d angeordnete Deckwände 515a', 515b'.

Die kurzen Seitenwände 500b, 500d und die Deckwände 515a', 515b' bilden gemeinsam mit den Enden der langen Seitenwände 500a, 500c sowie den Enden der Bodenwand 450a gegen den Innenraum der Hülle 450 offene Aufnahmetaschen 515a, 515b, welche die seitlich vom Bildschirm des Tablet-Computers 1 angeordneten Gehäuseabschnitte 1', 1" (Fig. 6a) allseitig umschließen (Fig. 10a).

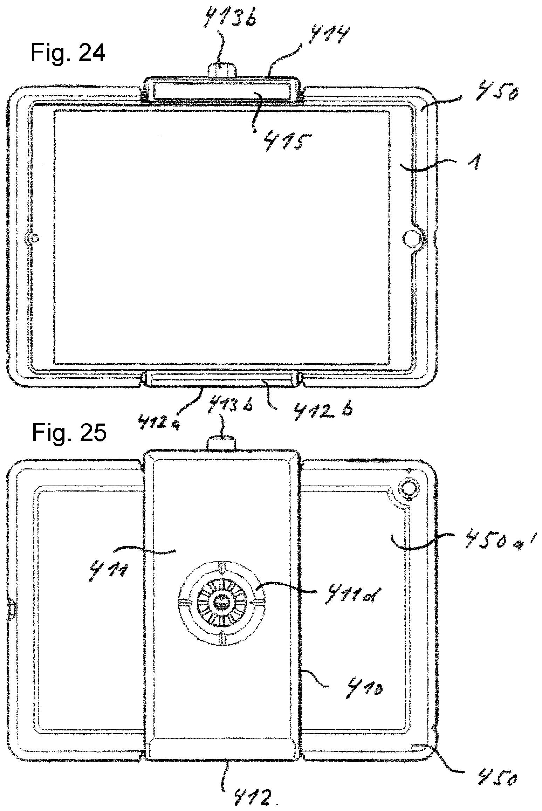

An den langen Seitenwänden 500a, 500c der Hülle 450 sind die Ausnehmungen 511, 511a, 511b und 521, 521a, 521b angeordnet, in welche die klammerförmigen Verbindungselemente 412, 412a, 412b, 413a, 414, 414a', 414a", 415 der Halterung 410 eingreifen (Fig. 24 bis 27).

Die klammerförmigen Verbindungselemente 412, 412a, 412b, 413a, 414, 414a', 414a", 415 an den langen Seitenwänden 500a, 500c und die Aufnahmetaschen 515a, 515b an den kurzen Seitenwänden 500b, 500d bilden gemeinsam einen den Tablet-Computer 1 im Wesentlichen allseitig umgreifenden Halterahmen, der eine sichere Verbindung zwischen der Halterung 410 und dem Tablet-Computer 1 gewährleistet und ein Loslösen der Hülle 450 vom Tablet-Computer 1 auch in den Eckbereichen verhindert.

Die Bodenwand 450a ist auf ihrer Rückseite 450a' gegenüber dem umlaufenden Rand 500a, 500b, 500c, 500d etwas vertieft. Auf der vertieften Rückseite 450a' der Bodenwand 450a ist ein reliefartiges Signet 450a" angebracht, dessen Höhe in etwa mit dem umlaufenden Rand 500a, 500b, 500c, 500d fluchtet.

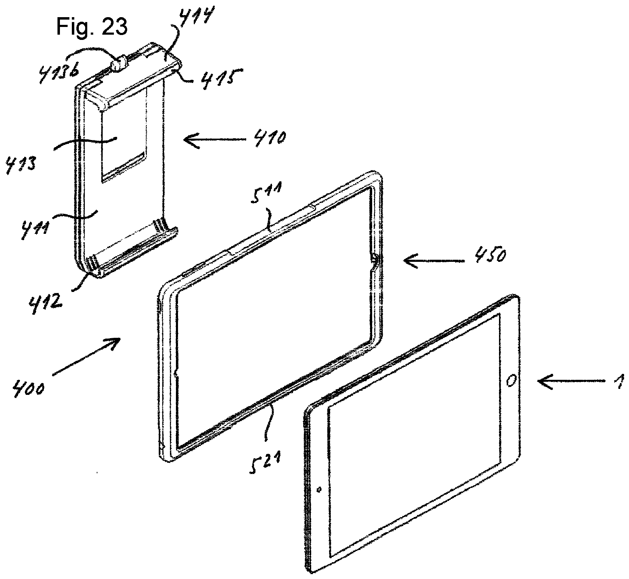

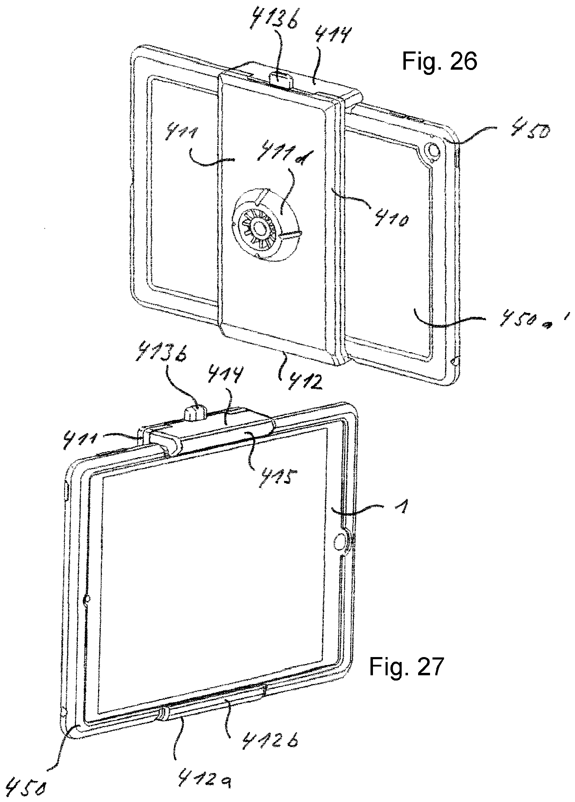

Fig. 23 bis 27 zeigen den Halter 400 umfassend die Halterung 410 und die Hülle 450 sowie einen Tablet-Computer 1 lose (Fig. 23) und montiert (Fig. 24 bis 27) in verschiedenen Ansichten von vorne (Fig. 24 und 27) und von hinten (Fig. 25 und 26).

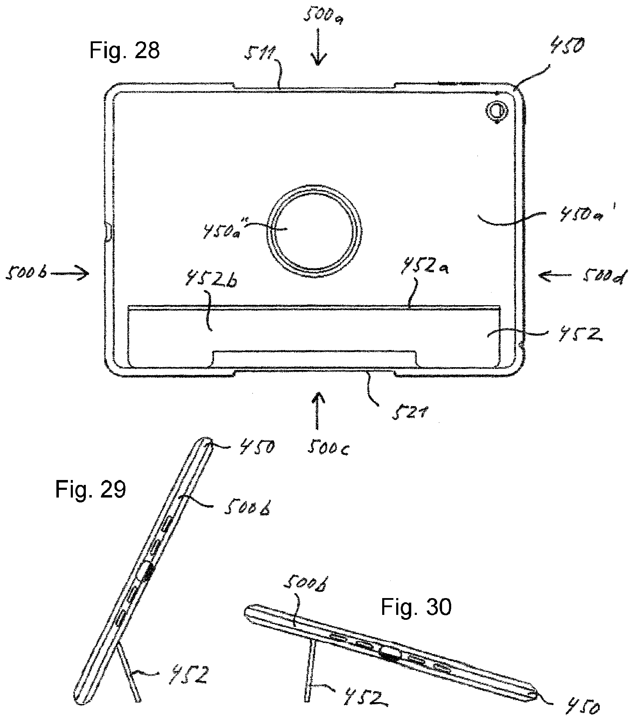

Fig. 28 bis 30 zeigen eine Ausführungsvariante der Hülle 450. Auf der Rückseite 450a' der Bodenwand 450a ist eine um eine parallel zu den langen Seitenwänden 500a, 500c ausgerichtete Drehachse 452a ausklappbare Stützleiste 452 angeordnet, mit der die Hülle 450 mit dem Tablet-Computer 1 in unterschiedlichen Schrägstellungen auf einer ebenen Unterlage aufgestellt werden kann. In der eingeklappten Nichtgebrauchsstellung fluchtet die Außenseite 452b der Stützleiste 452 in etwa mit dem umlaufenden Rand 500a, 500b, 500c, 500d der Hülle 450.

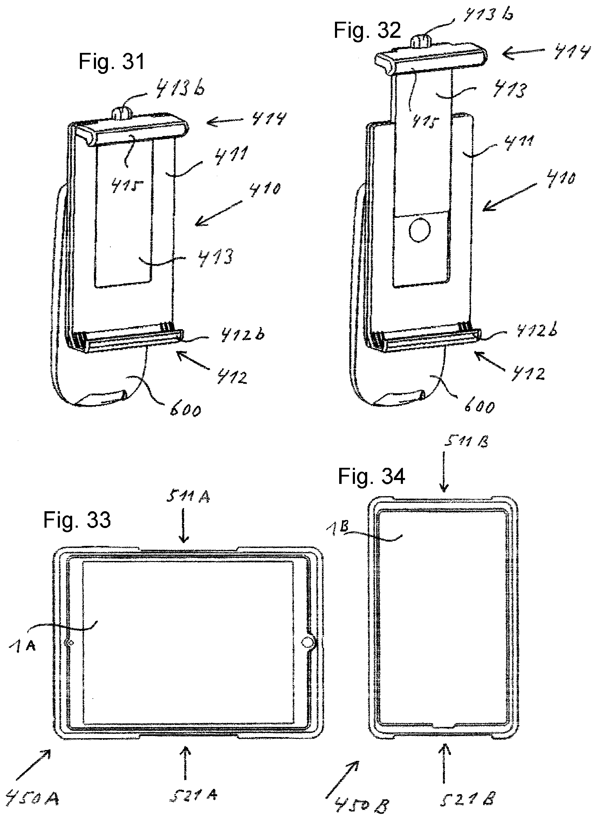

Fig. 31 bis 32 zeigen eine Halterung 410, die drehbar an einem Stützelement 600 einer Befestigungsvorrichtung angeordnet ist, so dass ein Tablet-Computer 1 mit Hülle 450 von einer Hochformatstellung in eine Querformatstellung und umgekehrt gedreht werden kann.

Die Halterung 410 umfasst einen Träger 411 mit einer fest angebrachten Halteklammer 412 und einen im Träger 411 linear verschiebbaren Schlitten 413 mit einer beweglichen Halteklammer 414 mit einem Niederhalter 415.

Von der bereits weiter vorne beschriebenen Funktionsweise der Halterung 410 unterscheidet sich die Halterung 410 gemäß Darstellungen in Fig. 31 bis 32 durch einen größeren Verstellweg des Schlittens 413, der durch Verlängerung von Schlitten 413 und Schlittenführung im Träger 411 erreicht wird.

Der Abstand zwischen den Halteklammer 412 und 414 ist zwischen einem minimalen Abstand (Fig. 31) und einem maximalen Abstand (Fig. 32) einstellbar. Daraus ergeben sich die minimalen und maximalen Abmessungen der Tablet-Computer 1, die mit der Hülle 450 in der Halterung 410 aufgenommen werden können.

Fig. 33 und 34 zeigen zwei unterschiedlich große Tablet-Computer 1A, 1B mit unterschiedlich großen Hüllen 450A, 450B. Bei der Hülle 450A sind die Ausnehmungen 511A, 521A für die Halteklammern 412, 414 in der Mitte der beiden Längsseiten angeordnet, bei der Hülle 450B sind die Ausnehmungen 511B, 521B für die Halteklammern 412, 414 in der Mitte der beiden Schmalseiten angeordnet.

Dies ermöglicht es, einen Tablet-Computer 1B mit Hülle 450B, deren Breite den minimalen Abstand zwischen den Halteklammern 412 und 414 der Halterung 410 unterschreitet, längs in die Halterung 410 einzusetzen. Durch die Möglichkeit die Halterung 410 von Hoch- ins Querformat zu drehen spielt es keine Rolle ob die Ausnehmungen 511A, 521A und 511B, 521B für die Halteklammern an den beiden Längs- oder Schmalseiten der Hüllen 450A, 450B angeordnet sind.

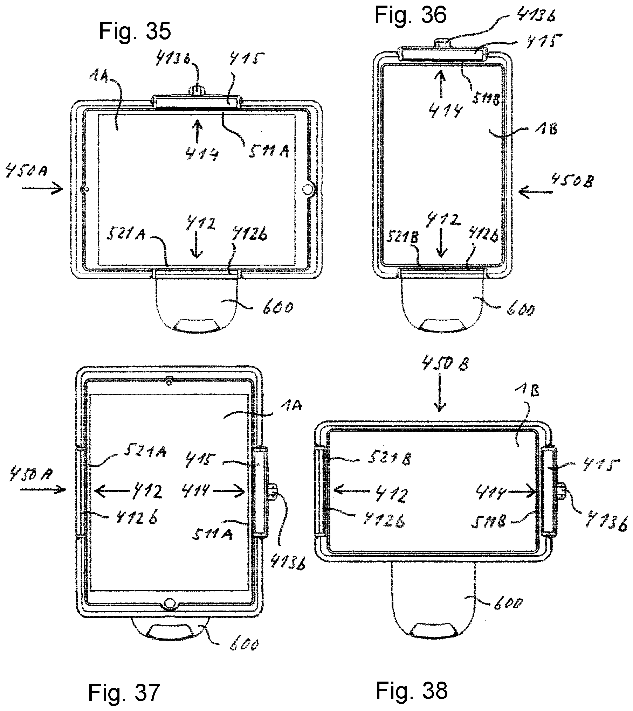

Fig. 35 bis 38 zeigen, dass unabhängig davon, auf welchen Seiten der Hüllen 450A, 450B die Ausnehmungen 511A, 521A und 511B, 521B angeordnet sind die unterschiedlich großen Tablet-Computer 1A, 1B in derselben Halterung 410 sowohl im Hochformat als auch im Querformat benutzbar sind.

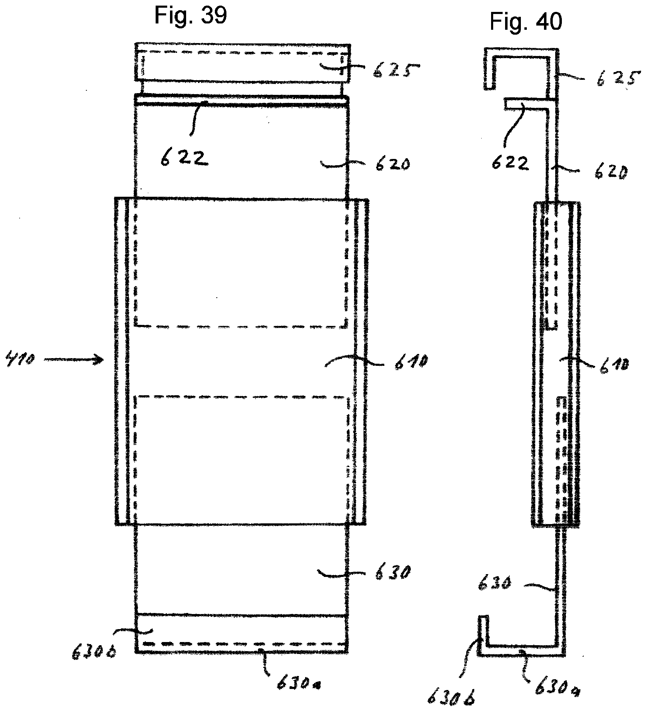

Fig. 39 bis 40 zeigen eine weitere Ausführungsform einer Halterung 410, mit der bei kompakter Bauweise ein breites Spektrum an unterschiedlich großen Tablet-Computern 1A,1B mit Hüllen 450A, 450B abgedeckt werden kann.

In einem auf zwei gegenüberliegenden Seiten offenen Träger 610 sind eine Halteklammer 630, 630a, 630b und ein Schlitten 620 mit einer Stützwand 622 übereinander angeordnet gelagert und in die in Fig. 39 und 40 dargestellten Auszugsstellungen bewegbar. Die Halteklammer 630, 630a, 630b und der Schlitten 620 sind nach bekannter Bauart mit Zahnstangen 621, 631 versehen und über ein Zahnrad 635 synchron und gegenläufig bewegbar und in einer gewünschten Stellung angepasst an die Abmessungen einer Hülle 450A, 450B mit einem Tablet-Computer 1A, 1B feststellbar.

Die Halteklammer 630, 630a, 630b umgreift den Tablet-Computer 1A, 1B an einem Rand. Am Schlitten 620 ist eine gegen die Stützwand 622 vorgespannte Halteklammer 625 angeordnet, die nach der vorgängig beschriebenen Funktionsweise den Tablet-Computer 1A,1B mit Hüllen 450A, 450B am gegenüberliegenden Rand umgreift.

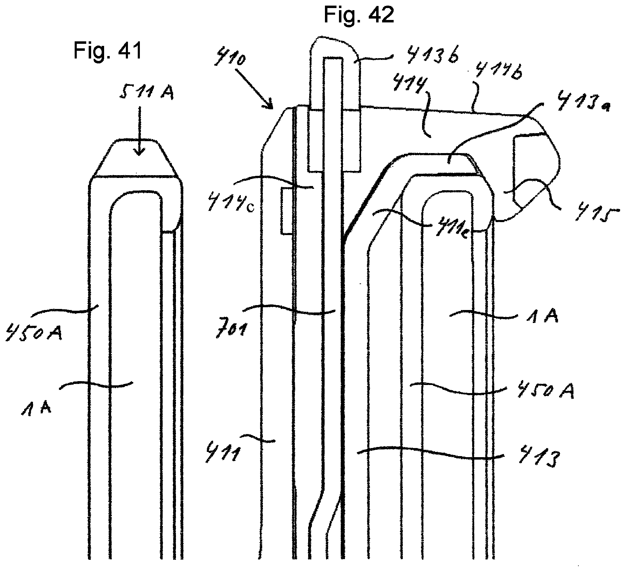

Fig. 41 zeigt eine Detailansicht der Hülle 450A mit eingesetztem Tablet-Computer 1A gemäß Darstellung von Fig. 33 im Bereich der Ausnehmung 511A im Längsschnitt.

Fig. 42 zeigt eine Detailansicht der Halterung 410 mit eingesetztem Tablet-Computer 1A mit Hülle 450A gemäß Darstellung von Fig. 35 im Bereich der Halteklammer 414 im Längsschnitt.

Der im Träger 411 linear geführte Schlitten 413 ist mit der Rampe 411e mit der Stützwand 413a verbunden.

Im Schlitten 413 ist die Halteklammer 414 mit der Stirnwand 414b und dem Niederhalter 415 linear geführt und gegen die Stützwand 413a des Schiebers 413 vorgespannt. In der Bodenwand 414c der Halteklammer 414 ist die Schubstange 701 mit der Taste 423b zum Deblockieren des Schlittens 413 gelagert (Fig. 15 - 17).

Wie in den Figuren 12 bis 14 gezeigt und beschrieben, wird ein in die Halterung eingesetzter Tablet-Computer 1A mit Hülle 450A beim gegeneinander Schieben von Schlitten 413 und Träger 411 über die am Träger 411 und am Schlitten 413 angeordneten keilförmigen Rampen 411f und 411e soweit angehoben, bis die Oberseite der Hülle 450A an den Unterseiten der Niederhalter 412b, 415 ansteht. Dadurch ist gewährleistet, dass die Hülle 450A mit dem Tablet-Computer 1A zwischen den Rampen 411f, 411e und den Niederhaltern 412b, 415 so eingespannt sind, dass sich weder die Hülle 450A aus der Halterung 410, noch der Tablet-Computer 1A aus der Hülle 450A lösen können.

Der Rand der Hülle 450A des Tablet-Computers 1A wird von der Rampe 411e sowie der Stützwand 413a und dem Niederhalter 415 umschlossen und allseitig abgestützt. Zur Entnahme des Tablet-Computers 1A mit der Hülle 450A aus der Halterung 410 wird die Halteklammer 414 soweit nach außen gedrückt bis sie die Hülle 450A nicht mehr überdeckt.

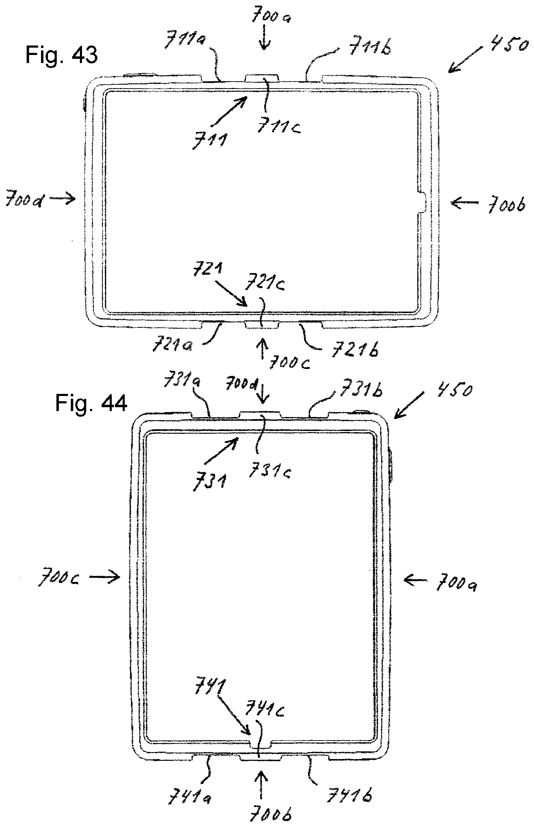

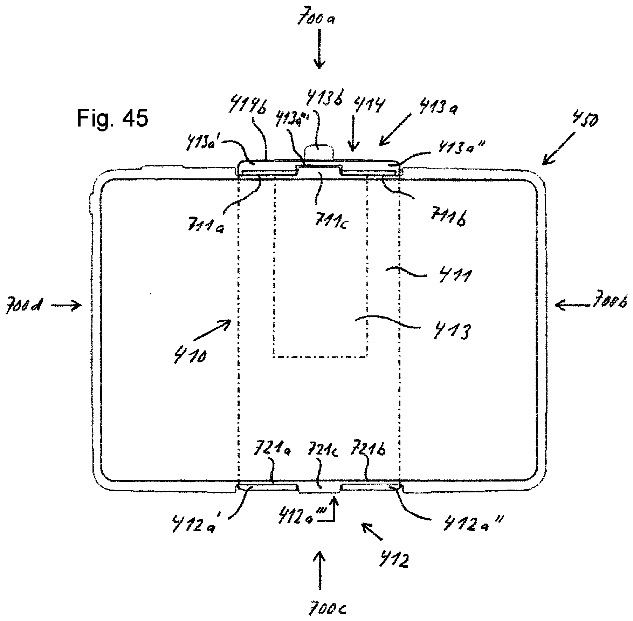

Fig. 43 bis 45 zeigen zwei Hüllen 450 mit einer alternativen Ausbildung der zweiten Verbindungselemente 711, 721, 731, 741 sowie eine Halterung 410 mit entsprechend angepassten ersten Verbindungselementen 412, 413a.

An der in Fig.43 gezeigten Hülle 450 sind die zweiten Verbindungselemente 711, 721 mittig an den beiden Längsseiten 700a, 700c angeordnet. Bei der in Fig.44 gezeigten Hülle 450 sind die zweiten Verbindungselemente 731, 741 mittig an den beiden Schmalseiten 700b, 700d angeordnet.

Die zweiten Verbindungselemente 711, 721, 731, 741 umfassen einen Mittelzahn 711c, 721c, 731c, 741c sowie beidseits des Mittelzahns 711c, 721c, 731c, 741c angeordnete Ausnehmungen 711a, 711b, 721a, 721b, 731a, 731b, 741a, 741b.

An der Halteklammer 412 des Trägers 411 und der Stützwand 413a des Schlittens 413 sind komplementär zu den zweiten Verbindungselementen 711, 721, 731, 741 ausgebildete erste Verbindungselemente 413a', 413a", 413 a'", 412a', 412a", 412a'" angeordnet, welche in die zweiten an der Hülle 450 angeordneten Verbindungselemente 711a, 711b, 711c, 721a, 721b, 721c eingreifen und mit diesen eine formschlüssige Verzahnung bilden, die ein seitliches Verrutschen der Hülle 450 in der Halterung 410 verhindert.

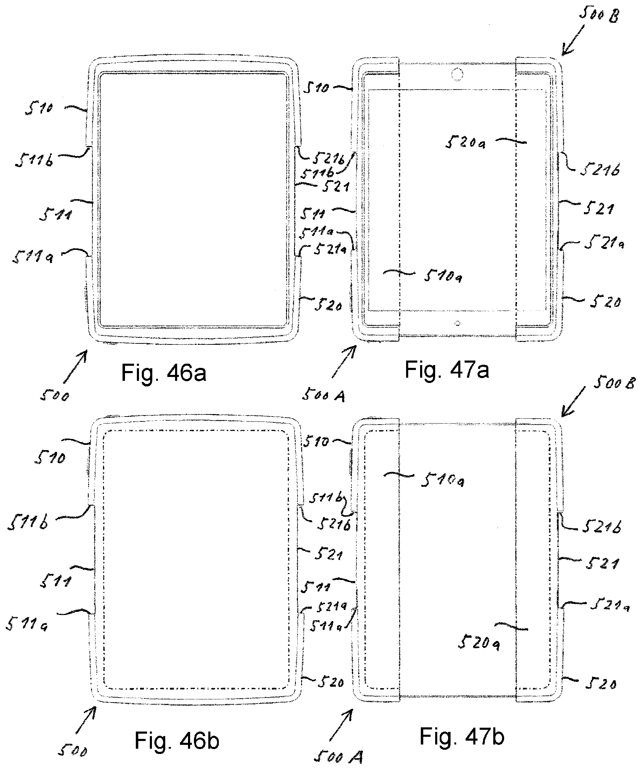

Fig. 46a und 46b zeigen einen einteiligen Halterahmen 500 von vorne (Fig.46a) und von hinten (46b). Die als Ausnehmungen mit seitlichen Anschlägen ausgebildeten zweiten Verbindungselemente 511, 511a, 511b und 521, 521a, 521b sind mittig an den beiden Längsseiten 510, 520 des Halterahmens 500 angeordnet.

Fig. 47 a und 47b zeigen einen zweiteiligen Halterahmen 500A, 500B von vorne (Fig.47a) und von hinten (Fig.47b). Die als Ausnehmungen mit seitlichen Anschlägen ausgebildeten zweiten Verbindungselemente 511, 511a, 511b und 521, 521a, 521b sind mittig an den Längsseiten 510, 520 der beiden Halterahmen 500A, 500B angeordnet. Auf der Rückseite sind die beiden Halterahmen 500A, 500B mit Bodenwänden 510a, 510b verstärkt.

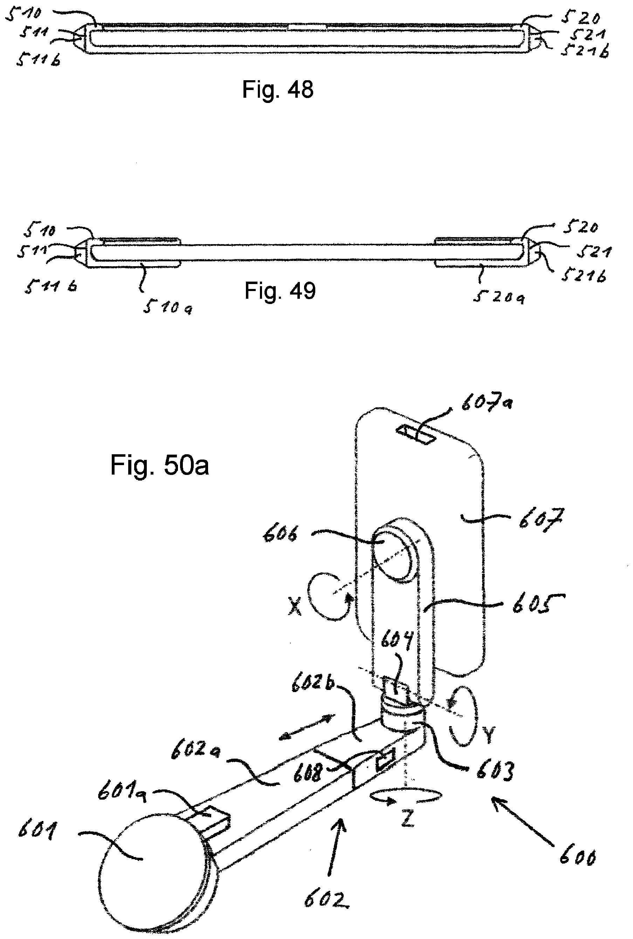

Fig. 48 zeigt einen Querschnitt des einteiligen Halterahmens 500 gemäß Darstellung von Fig.46a.

Fig. 49 zeigt einen Querschnitt des zweiteiligen Halterahmens 500A, 500B gemäß Darstellung von Fig.47a.

Fig. 50a bis 51 zeigen ein erstes Anwendungsbeispiel mit einer Befestigungsvorrichtung in Form eines Vakuum-Saugers 601 zum Anbringen des Halters 600 auf der Innenseite einer Windschutzscheibe 610 eines Kraftfahrzeugs.

Am Vakuum-Sauger 601 ist ein Trägerarm 602 angebracht, der in etwa horizontal in Richtung Fahrgastraum ausgerichtet ist. Der Trägerarm 602 umfasst ein erstes mit dem Vakuum-Sauger 601 fest verbundenes Segment 602a, in dem ein zweites Segment 602b linear ausziehbar geführt ist. Mit einer (nicht dargestellten) Rastvorrichtung kann das zweite Segment 602b in der gewünschten Auszugsposition festgestellt und mit beidseitig an den Seitenwänden des zweiten Segments 602b angeordneten Lösetasten 608 gelöst werden.

Am vorderen Ende des zweiten Segments 602b ist ein erstes Drehlager 603 angeordnet, an dem ein Lagerbock 604 um eine vertikale Drehachse Z 360° drehbar gelagert ist.

Am Lagerbock 604 ist ein zweites Drehlager angeordnet, an dem ein Stützelements 605 um eine horizontale Drehachse Y zwischen einer in etwa horizontalen und einer in etwa vertikalen Stellung drehbar gelagert ist.

Am oberen Ende des Stützelements 605 ist ein drittes Drehlager 606 angeordnet, an dem eine Halterung 607 zur Aufnahme eines Geräts (1, 1A, 1B, 1a) um eine senkrecht zur Breitseite der Halterung 607 ausgerichtete Drehachse X 360° drehbar gelagert ist.

Alle drei Drehlager können in bevorzugten Stellungen lösbar arretiert werden.

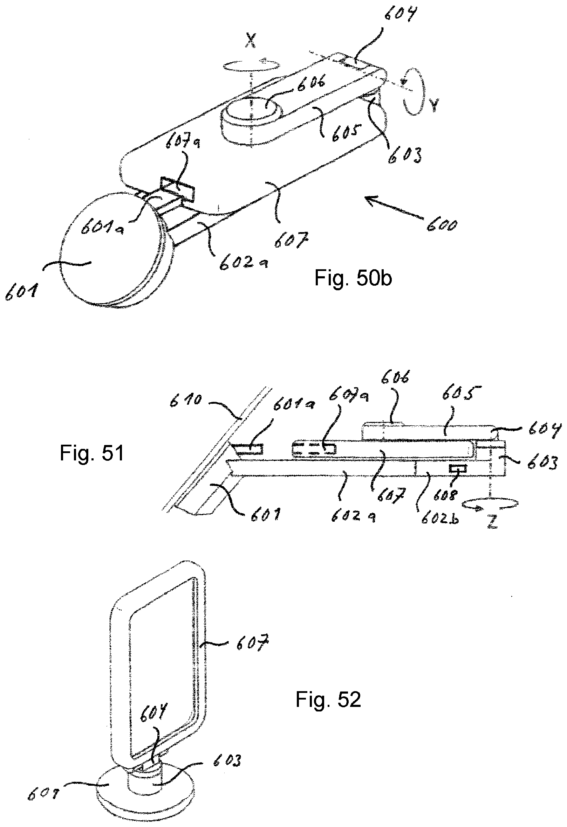

Bei Nichtgebrauch des Geräts (1, 1A, 1B, 1a) kann die Halterung 607 mit dem Bildschirm des Geräts (1, 1A, 1B, 1a) gegen die Oberseite des Trägerarms 602 gerichtet horizontal auf den Trägerarm 602 abgelegt werden (Fig. 50b und Fig. 51), so dass der Bildschirm Geräts (1, 1A, 1B, 1a) vor Verunreinigungen, Beschädigungen und Sonneneinstrahlung geschützt und die Sicht auf die Fahrbahn minimal eingeschränkt werden.

Zum Gebrauch des Geräts (1, 1A, 1B, 1a) kann die Halterung 607 am zweiten Segment 602b soweit aus dem ersten Segment 602a ausgezogen werden, dass die Halterung 607 mit dem Gerät (1, 1A, 1B, 1a) ohne Kollision mit der Windschutzscheibe 610 um die Drehachse Y aus der horizontalen Nichtgebrauchslage in eine in etwa vertikale Gebrauchslage aufgerichtet und der Bildschirm des Geräts (1, 1A, 1B, 1a) um die Drehachsen Y und Z auf den Benutzer ausgerichtet werden können (Fig. 50a).

Am dritten Drehlager 606 kann die Halterung 607 mit dem Gerät (1, 1A, 1B, 1a) zwischen Hoch- und Querformatstellungen gedreht und die Öffnung 607a für die Ladebuchse des Geräts (1, 1A, 1B, 1a) in der horizontalen Nichtgebrauchslage der Halterung 607 auf den am ersten Segment 602a bzw. am Vakuum-Sauger 601 angeordneten Ladestecker 601a ausgerichtet werden. Durch Verschieben des zweiten Segments 602b kann der Ladestecker 601a durch die Öffnung 607a mit der Ladebuchse des Geräts (1, 1A, 1B, 1a) gekoppelt oder von dieser entkoppelt werden (Fig. 50b und Fig. 51).

Die Halterung 607 zur Aufnahme des Geräts (1, 1A, 1B, 1a) kann nach einer der vorgängig beschriebenen Ausführungsformen ausgebildet sein.

Fig. 52 zeigt eine Variante der in den Fig. 50a bis Fig. 51 gezeigte Ausführungsform des Halters 600. An Stelle eines mit einem Vakuum-Sauger 601 an der Windschutzscheibe 610 befestigten Trägerarms 602 ist bei der in Fig.52 gezeigten Variante das erste Drehlager 603 an einem Sockel 609 angeordnet, der mittels Klebe- oder Schraubbefestigung an einer flachen Stelle wie bspw. die Abdeckung einer Instrumententafel befestigt werden kann.

In einer weiteren Variante kann die in den Fig. 50a bis Fig.51 gezeigte Ausführungsform des Halters 600 mit einer Steckverbindung mit einem Steckelement und einer Aufnahmebuchse Fahrzeug an einem Bauteil eines Kraftfahrzeugs wie z. B. einer Mittelkonsole befestigt werden.

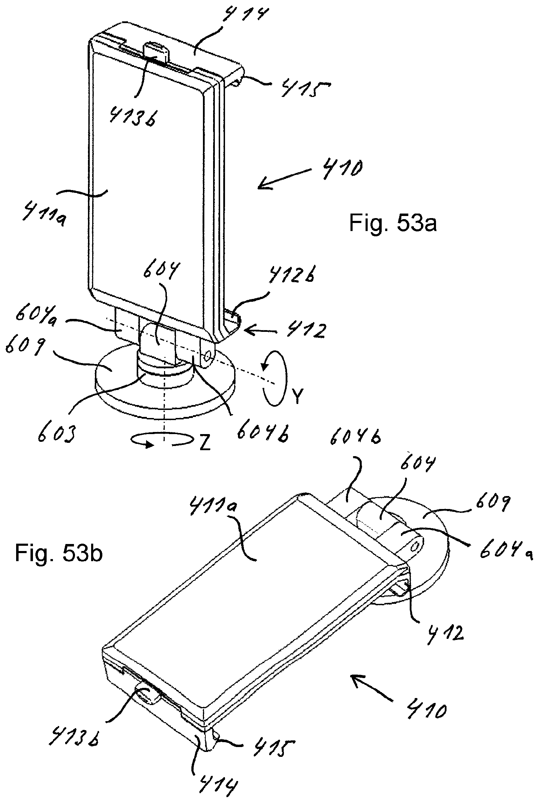

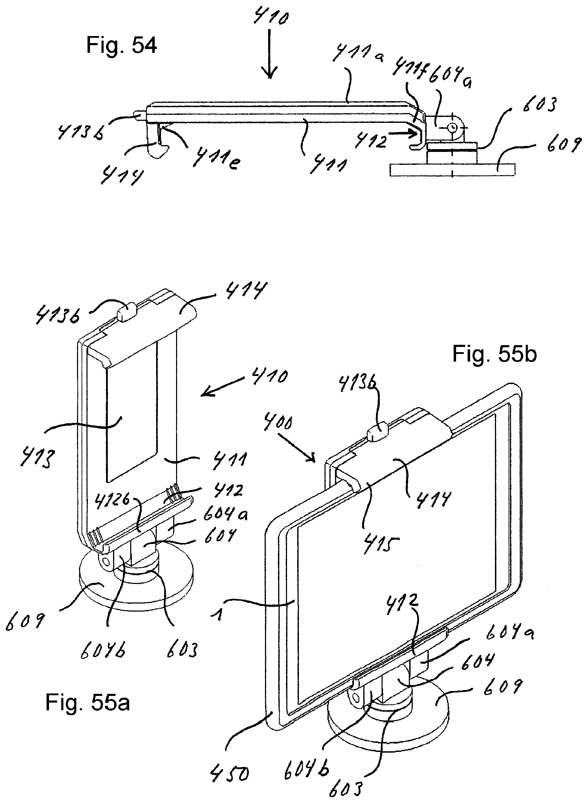

Fig. 53a bis 55b zeigen ein weiteres Anwendungsbeispiel des Halters 400 mit einer Befestigungsvorrichtung in Form eines Sockels 609, der mittels Klebe- oder Schraubbefestigung an einer flachen Stelle wie bspw. die Abdeckung einer Instrumententafel befestigt werden kann.

Wie bei der in Fig. 52 gezeigten Ausführungsform ist am Sockel 609 ein erstes Drehlager 603 angeordnet, welches eine Drehung der Halterung 410 von 360° um eine vertikale Drehachse Z ermöglicht.

Am Drehlager 603 ist ein Lagerbock 604 angeordnet, der gemeinsam mit den am Träger 411 angeordneten Gabelenden 604a, 604b ein zweites Drehlager bildet, das eine beidseitige Neigung des Halterung 410 von je ca. 90° um eine horizontale Drehachse y ermöglicht.

Wie bei den in den Fig. 50a bis Fig. 52 gezeigten Ausführungsformen ermöglicht dies, die Halterung 410 aus einer vertikalen oder schrägen Gebrauchslage in eine horizontale Nichtgebrauchslage zu schwenken, was insbesondere beim Anbringen der Halterung 410 im Sichtbereich des Fahrers die Sichtbehinderung massiv reduziert.

Zum Schutz vor Verschmutzung oder Beschädigung ist es zudem möglich, die Halterung 410 so zu drehen, dass der Bildschirm in der Nichtgebrauchslage nach unten ausgerichtet ist.

Der Aufbau und Funktion der Halterung 410 sowie der Hülle 450 zur Aufnahme eines Geräts (1, 1A, 1B, 1a) entsprechen im Übrigen den vorgängig beschriebenen Ausführungsformen, auf die verwiesen wird. Zum besseren Verständnis wurden die dort verwendeten Bezugszeichen beibehalten.

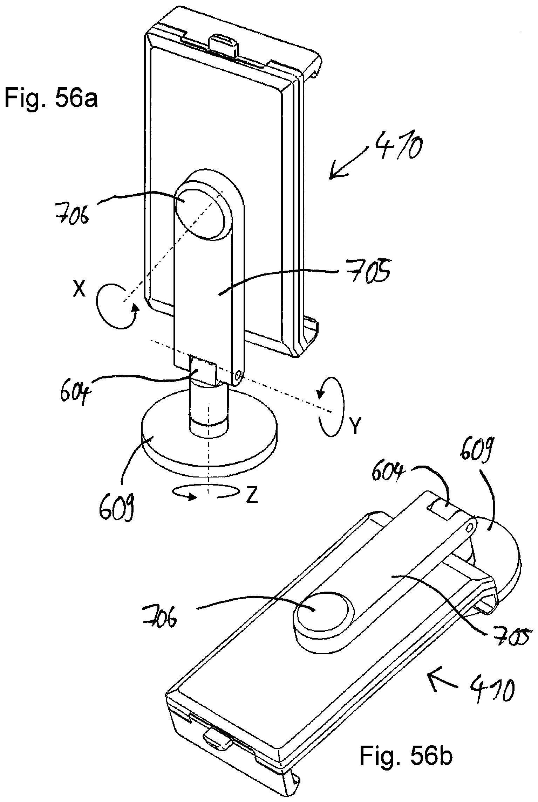

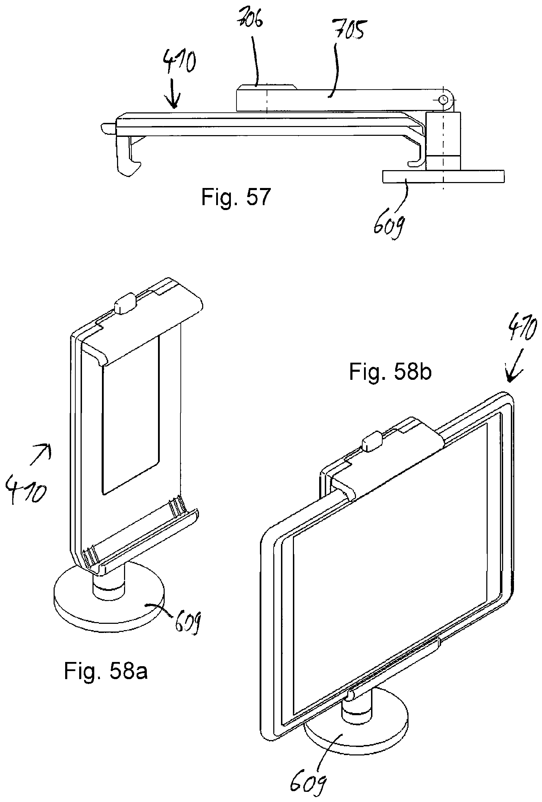

Die Figuren 56a bis 58b zeigen eine Weiterbildung der Halterung 410 gemäß den Figuren 53a bis 55b.

Dabei ist zusätzlich ein Stützelement 705 zwischen Lagerbock 604 und Halterung 410 vorgesehen. Am oberen Ende des Stützelements 705 ist ein drittes Drehlager 706 angeordnet, an dem die Halterung 410 um eine senkrecht zur Breitseite der Halterung 410 ausgerichtete Drehachse X um 360° drehbar gelagert ist, so wie dies in der Ausführungsform gemäß den Figuren 50a bis 52 gezeigt ist.

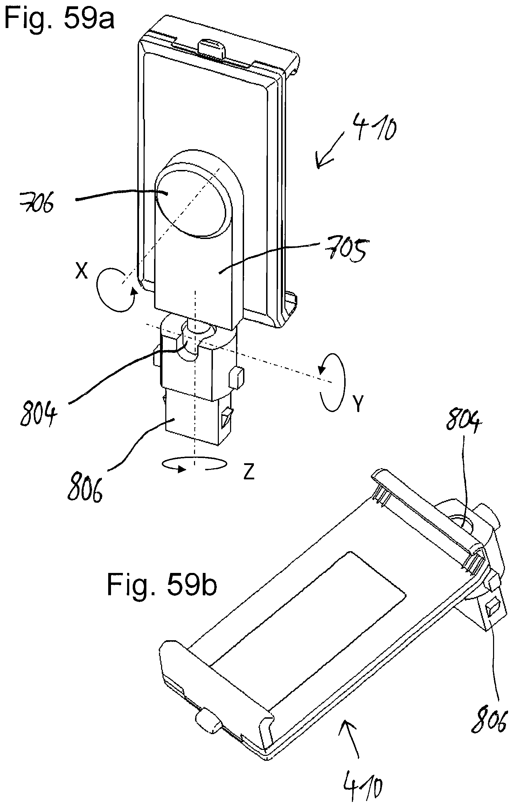

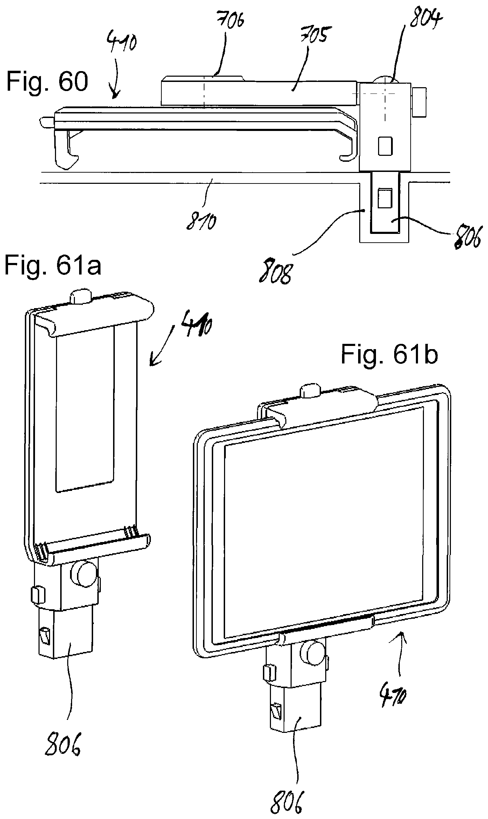

Die Figuren 59a bis 61b zeigen eine Weiterbildung der Halterung 410 gemäß den Figuren 56a bis 58b. Statt eines Sockels 609 mit dem Doppelgelenk 604 ist ein Steckelement 806 mit einem Kugelkopf 804 vorgesehen. Das Steckelement 806 kann in eine Aufnahmebuchse 808 (Fig. 60) bspw. auf einer Armaturenabdeckung 810 angeordnet werden.

## Patentansprüche

1. Halter (400) zur lösbaren Befestigung eines flachen in etwa rechteckigen Geräts wie eines Tablet-Computers (1, 1A, 1B) oder eines Smartphones (1a) an einem Bauteil (381, 382, 383, 610), insbesondere an einem Bauteil eines Kraftfahrzeugs, wobei der Halter (400) eine an dem Bauteil (381, 382, 383, 610) befestigbare Halterung (410) und einen an der Halterung (410) lösbar befestigbaren Halterahmen (500) zur Aufnahme des Geräts (1, 1A, 1B, 1a) umfasst, **dadurch gekennzeichnet, dass** die Halterung (410) einen Träger (411) mit zwei an gegenüberliegenden Seiten angeordneten ersten Verbindungselementen (412, 412a, 412b, 413a, 414, 415, 622, 625, 630, 630a, 630b) umfasst, deren Abstand einstellbar und so an Halterahmen (500) bzw. Hüllen (450, 450A, 450B) mit unterschiedlichen Außenabmessungen anpassbar ist, und dass der Halterahmen (500) an zwei gegenüberliegenden Rändern (510, 520) zweite Verbindungselemente (511, 511A, 511B, 521, 521A, 521B, 711, 721, 731, 741) aufweist, wobei die ersten und zweiten Verbindungselemente komplementär zueinander derart ausgebildet sind, dass bei in die Halterung (410) eingesetztem Halterahmen (500) die ersten Verbindungselemente (412, 412a, 412b, 413a, 414, 415, 622, 625, 630, 630a, 630b) und die zweiten Verbindungselemente (511, 511A, 511B, 521, 521A, 521B, 711, 721, 731, 741) zur gegenseitigen Fixierung ineinander greifen, so dass der Halterahmen (500) nicht in der Halterahmenebene und/oder senkrecht zur Halterahmenebene aus der Halterung (410) heraus bewegt werden kann.

2. Halter nach Anspruch 1, **dadurch gekennzeichnet,**
- **dass** der Halterahmen (500) zweiteilig ausgebildet ist, wobei je ein zweites Verbindungselement (511, 511A, 511B, 521, 521A, 521B, 711, 721, 731, 741) an je einem Halterahmen-Teil (500A, 500B) angeordnet ist und/oder
- **dass** der Halterahmen (500) Teil einer das Gerät (1, 1A, 1B, 1a) aufnehmenden Hülle (450, 450A, 450B) mit einer Bodenwand (450a, 451) sowie das Gerät (1, 1A, 1B, 1a) allseitig umschließenden Seitenwänden (510, 520, 500a, 500b, 500c, 500d) ist, wobei vorzugsweise die Hülle (450, 450A, 450B) auf mindestens zwei gegenüberliegenden Seiten Deckwände (515a', 515b') umfasst, die das Gerät (1, 1A, 1B, 1a) im Randbereich seitlich des Bildschirms mindestens teilweise überdecken.

3. Halter nach Anspruch 2, **dadurch gekennzeichnet, dass** die Hülle (450, 450A, 450B) auf zwei gegenüberliegenden Seiten gegen den Innenraum der Hülle (450, 450A, 450B) offene Aufnahmetaschen (515a, 515b) aufweist, welche zwei gegenüberliegende Ränder des Geräts (1, 1A, 1B, 1a) allseitig umschließen, wobei optional vorgesehen ist, dass die zweiten Verbindungselemente (511, 511A, 511B, 521, 521A, 521B, 711, 721, 731, 741) an den beiden langen Rändern (510, 520, 500a, 500b, 500c, 500d) der Hülle (450, 450A, 450B) angeordnet sind und die Aufnahmetaschen (515a, 515b) an den beiden kurzen Rändern (510, 520, 500a, 500b, 500c, 500d) der Hülle (450, 450A, 450B) angeordnet sind, oder wobei optional vorgesehen ist, dass die Aufnahmetaschen (515a, 515b) an den beiden langen Rändern (510, 520, 500a, 500b, 500c, 500d) der Hülle (450, 450A, 450B) angeordnet sind und die zweiten Verbindungselemente (511, 511A, 511B, 521, 521A, 521B, 711, 721, 731, 741) an den beiden kurzen Rändern (510, 520, 500a, 500b, 500c, 500d) der Hülle (450, 450A, 450B) angeordnet sind.

4. Halter nach einem der voranstehenden Ansprüche, **dadurch gekennzeichnet, dass** die Hülle (450, 450A, 450B) einstückig aus einem elastischen Material, wie bspw. Silikon oder TPU gefertigt ist, und/oder dass der Halterahmen (500) als U-förmiges, vorzugsweise aus einem elastischen Material wie bspw. Silikon oder TPU gefertigtes, Profil ausgebildet ist, welches den Rand des Geräts (1, 1A, 1B, 1a) allseitig umschließt, und/oder dass der Rand des Geräts (1, 1A, 1B, 1a) außerhalb der zweiten Verbindungselemente (511, 511A, 511B, 521, 521A, 521B, 711, 721, 731, 741) durch einen am Halterahmen (414, 414b, 415) oder an der Hülle (450, 450A, 450B) angeordneten Schutzrand (450, 450A, 450B) abgedeckt wird.

5. Halter nach einem der voranstehenden Ansprüche, **dadurch gekennzeichnet,**
- **dass** die zweiten Verbindungselemente (511, 511A, 511B, 521, 521A, 521B, 711, 721, 731, 741) an den Rändern (510, 520, 500a, 500b, 500c, 500d) des Halterahmens (500) oder der Hülle vom Halterahmen (500) oder der Hülle gebildet werden oder als separate Teile (511') am Halterahmen oder an der Hülle (500) angeordnet sind und/oder
- **dass** die zweiten Verbindungselemente (511, 511A, 511B, 521, 521A, 521B, 711, 721, 731, 741) als Ausnehmungen und/oder Erhebungen ausgebildet sind und seitliche Anschläge (511a, 511b, 521a, 521b, 511A) für die ersten Verbindungselemente (412, 412a, 412b, 413a, 414, 415, 622, 625, 630, 630a, 630b) bilden, wobei vorzugsweise die ersten Verbindungselemente (412, 412a, 412b, 413a, 414, 415, 622, 625, 630, 630a, 630b) und die zweiten Verbindungselemente (511, 511A, 511B, 521, 521A, 521B, 711, 721, 731, 741) als ineinandergreifende Verzahnungen ausgebildet sind und/oder wobei vorzugsweise die Ausnehmungen und /oder Erhebungen bzw. Verzahnungen an den Stirnseiten (510, 520, 500a, 500b, 500c, 500d) und oder im Randbereich der Vorder- und/oder Rückseite des Halterahmens (500) oder der Hülle (450, 450A, 450B) angeordnet sind.

6. Halter nach einem der voranstehenden Ansprüche, **dadurch gekennzeichnet, dass** die zweiten Verbindungselemente (511, 511A, 511B, 521, 521A, 521B, 711, 721, 731, 741) in etwa mittig an den Rändern (510, 520, 500a, 500b, 500c, 500d) des Halterahmens (500) oder der Hülle (450, 450A, 450B) angeordnet sind und/oder dass die zweiten Verbindungselemente (511, 511A, 511B, 521, 521A, 521B, 711, 721, 731, 741) symmetrisch ausgebildet sind und identische Konturen aufweisen.

7. Halter nach einem der voranstehenden Ansprüche, **dadurch gekennzeichnet, dass** die ersten Verbindungselemente (412, 412a, 412b, 413a, 414, 415, 622, 625, 630, 630a, 630b) klammerförmig ausgebildet sind und eine erste Halteklammer (412, 412a, 412b) mit einem Niederhalter (412b) und eine zweite Halteklammer (414, 414b, 415) mit einem Niederhalter 415) umfassen, welche in die zweiten Verbindungselemente (511, 511A, 511B, 521, 521A, 521B, 711, 721, 731, 741) eingreifen und/oder die zweiten Verbindungselemente umgreifen, wobei optional vorgesehen ist, dass die zweiten Verbindungselemente (511, 511A, 511B, 521, 521A, 521B, 711, 721, 731, 741) als Ausnehmungen mit seitlichen Anschlägen (511a, 511b, 521a, 521b, 511A) ausgebildet sind, in welche die erste Halteklammer (412, 412a, 412b) und die zweite Halteklammer (414, 414b, 415) eingreifen.

8. Halter nach Anspruch 7, dass die erste Halteklammer (412, 412a, 412b) fest am Träger (411) und die zweite Halteklammer (414, 414b, 415) an einem im oder am Träger (411) gelagerten ausziehbaren Schlitten (413) angeordnet sind.

9. Halter nach Anspruch 8, **dadurch gekennzeichnet, dass** der Schlitten (413) parallel zur Längsachse (X - X) des Trägers (411) verstellbar gelagert und in unterschiedlichen Positionen mit einer Arretiervorrichtung (700) feststellbar ist, wobei die Arretiervorrichtung (700) vorzugsweise mit einer an der Stirnwand (414b) der zweiten Halteklammer (414, 414b, 415) zugänglichen Taste (413b) lösbar ist.

10. Halter nach Anspruch 8 oder 9, **dadurch gekennzeichnet, dass** an dem der ersten Halteklammer (412, 412a, 412b) abgewandten Ende des Schlittens (413) eine Stützwand (413a) angeordnet ist, die einen festen Anschlag für das Gerät (1, 1A, 1B, 1a) mit Halterahmen (500) oder Hülle (1, 1A, 1B) bildet.

11. Halter nach einem der Ansprüche 8 bis 10, **dadurch gekennzeichnet, dass** die zweite Halteklammer (414, 414b, 415) parallel zur Längsachse (X - X) bewegbar im oder am Schlitten (413) gelagert und mit einer Feder (720) gegen die Stützwand (413a) vorgespannt ist, so dass der Niederhalter (415) der Halteklammer (414, 414b, 415) über die Stützwand (413a) ragt und den Rand des Halterahmens (500) oder der Hülle (450, 450A, 450B) mit dem in die Halterung (410) eingesetzten Gerät (1, 1A, 1B) überdeckt.

12. Halter nach einem der Ansprüche 8 bis 11, **dadurch gekennzeichnet, dass** am Träger (411) und am Schlitten (413) keilförmige Rampen (411e, 411f) angeordnet sind, die ein in die Halterung (410) eingesetztes Gerät (1, 1A, 1B, 1a) mit Halterahmen (500) oder Hülle (450, 450A, 450B) beim gegeneinander Schieben von Schlitten (413) und Träger (411) soweit anheben, bis der Halterahmen (500) oder die Hülle (450, 450A, 450B) an den beiden Niederhaltern (412b, 415) anstehen, wobei vorzugsweise der Halterahmen (500) oder die Hülle (450, 450A, 450B) mit dem Gerät (1, 1A, 1B, 1a) von der Rampe (411f) sowie der Rückwand (412a) und dem Niederhalter (412b) an einem Rand und von der Rampe (411e), der Stützwand (413a) und dem Niederhalter (415) am gegenüberliegenden Rand im Bereich der Ausnehmungen (511a, 511b, 521a, 521b, 511A) umgriffen und allseitig abgestützt werden.

13. Halter nach einem der Ansprüche 7 bis 12, **dadurch gekennzeichnet, dass** die Rückwand (412a) und der Niederhalter (412b) der ersten Halteklammer (412, 412a, 412b) und die Stützwand (413a) sowie der Niederhalter (415) der zweiten Halteklammer (414, 414b, 415) die Ausnehmungen (511a, 511b, 521a, 521b, 511A) am Halterahmen (500) bzw. an der Hülle (450, 450A, 450B) mit dem Gerät (1, 1A, 1B, 1a) umgreifen.

14. Halter nach einem der voranstehenden Ansprüche, **dadurch gekennzeichnet, dass** die Halterung (410) über eine lösbare Kupplung mit einem Steckelement (380) an der Halterung (410) und einer Aufnahmebuchse (381) am Bauteil (381, 382, 383, 610) mit dem Bauteil verbunden werden kann.

## Claims

1. A holder (400) for releasably securing a flat, approximately rectangular device, such as a tablet computer (1, 1A, 1B) or a smartphone (1a), to a component (381, 382, 383, 610), in particular to a component of a motor vehicle, the holder (400) comprising a mounting (410) which can be secured to the component (381, 382, 383, 610) and a holder frame (500) for receiving the device (1, 1A, 1B, 1a), wherein the holder frame (500) can be releasably secured to the mounting (410), **characterized in that** the mounting (410) comprising a carrier (411) having first connection elements (412, 412a, 412b, 413a, 414, 415, 622, 625, 630, 630a, 630b) arranged on opposite sides, the spacing thereof being adjustable and thus adaptable to holder frames (500) or cases (450, 450A, 450B) having various external dimensions, and **in that** the holder frame (500) has second connection elements (511, 511A, 511B, 521, 521A, 521B, 711, 721, 731, 741) at two opposite edges (510, 520), wherein the first and second connection elements are designed in a complementary manner with respect to each other such that, when the holder frame (500) is inserted into the mounting (410), the first connection elements (412, 412a, 412b, 413a, 414, 415, 622, 625, 630, 630a, 630b) and the second connection elements (511, 511A, 511B, 521, 521A, 521B, 711, 721, 731, 741) interlock for the purpose of mutual fixing such that the holder frame (500) cannot be moved out of the mounting (410) in the holder frame plane and/or perpendicularly to the holder frame plane.

2. A holder according to claim 1, **characterized**
- **in that** the holder frame (500) has a two-part design, wherein each of the second connection elements (511, 511A, 511B, 521, 521A, 521B, 711, 721, 731, 741) is arranged on one of the holder frame parts (500A, 500B) and/or
- **in that** the holder frame (500) is part of a case (450, 450A, 450B) that receives the device (1, 1A, 1B 1a) having a bottom wall (450a, 451) and side walls (510, 520, 500a, 500b, 500c, 500d) that enclose the device (1, 1A, 1B, 1a) on all sides, wherein preferably the case (450, 450A, 450B) comprises cover walls (515a', 515b') on at least two opposite sides, the cover walls at least partially covering the device (1, 1A, 1B, 1a) in the peripheral area along the sides of the screen.

3. A holder according to claim 2, **characterized in that** the case 450, 450A, 450B) has receiving pockets (515a, 515b) on two opposite sides that open towards the interior of the case (450, 450A, 450B) and enclose two opposite edges of the device (1, 1A, 1B, 1a) on all sides, wherein optionally the second connection elements (511, 511A, 511B, 521, 521A, 521B, 711, 721, 731, 741) are arranged on the two long edges (510, 520, 500a, 500b, 500c, 500d) of the case (450, 450A, 450B) and the receiving pockets (515a, 515b) are arranged on the two short edges (510, 520, 500a, 500b, 500c, 500d) of the case (450, 450A, 450B), or wherein optionally the receiving pockets (515a, 515b) are arranged on the two long edges (510, 520, 500a, 500b, 500c, 500d) of the case (450, 450A, 450B) and the second connection elements (511, 511A, 511B, 521, 521A, 521B, 711, 721, 731, 741) are arranged on the two short edges (510, 520, 500a, 500b, 500c, 500d) of the case (450, 450A, 450B).

4. A holder according to one of the preceding claims, **characterized in that** the case (450, 450A, 450B) is made as one piece from an elastic material, such as silicone or TPU, and/or **in that** the holder frame (500) is designed as a U-shaped profile, preferably made from an elastic material, such as silicone or TPU, that encloses the edge of the device (1, 1A, 1B, 1a) on all sides, and/or **in that** the edge of the device (1, 1A, 1B, 1a) outside of the second connection elements (511, 511A, 511B, 521, 521A, 521B, 711, 721, 731, 741) is covered by a protective edge (450, 450A, 450B) arranged on the holder frame (414, 414b, 415) or on the case (450, 450A, 450B).

5. A holder according to one of the preceding claims, **characterized**
- **in that** the second connection elements (511, 511A, 511B, 521, 521A, 521B, 711, 721, 731, 741) are formed on the edges (510, 520, 500a, 500b, 500c, 500d) of the holder frame (500) or of the case from the holder frame (500) or of the case or are arranged as separate parts (511') on the holder frame or case (500) and/or
- **in that** the second connection elements (511, 511A, 511B, 521, 521A, 521B, 711, 721, 731, 741) are designed as recesses and/or protrusions and form lateral stops (511a, 511b, 521a, 521b, 511A) for the first connection elements (412, 412a, 412b, 413a, 414, 415, 622, 625, 630, 630a, 630b), wherein preferably the first connection elements (412, 412a, 412b, 413a, 414, 415, 622, 625, 630, 630a, 630b) and the second connection elements (511, 511A, 511B, 521, 521A, 521B, 711, 721, 731, 741) are designed as interlocking teeth and/or wherein preferably the recesses and/or protrusions or teeth are arranged on the faces (510, 520, 500a, 500b, 500c, 500d) and/or in the edge region of the front and/or rear side of the holder frame (500) or case (450, 450A, 450B).

6. A holder according to one of the preceding claims, **characterized in that** the second connection elements (511, 511A, 511B, 521, 521A, 521B, 711, 721, 731, 741) are arranged approximately centrally on the edges (510, 520, 500a, 500b, 500c, 500d) of the holder frame (500) or case (450, 450A, 450B) and/or **in that** the second connection elements (511, 511A, 511B, 521, 521A, 521B, 711, 721, 731, 741) are designed symmetrically and have identical contours.

7. A holder according to one of the preceding claims, **characterized in that** the first connection elements (412, 412a, 412b, 413a, 414, 415, 622, 625, 630, 630a, 630b) are clip-shaped and comprise a first holding clip (412, 412a, 412b) having a hold-down element (412b) and a second holding clip (414, 414b, 415) having a hold-down element (415) that engage with the second connection elements (511, 511A, 511B, 521, 521A, 521B, 711, 721, 731, 741) and/or engage around the second connection elements, wherein optionally the second connection elements (511, 511A, 511B, 521, 521A, 521B, 711, 721, 731, 741) are designed as recesses having lateral stops (511a, 511b, 521a, 521b, 511A) with which the first holding clip (412, 412a, 412b) and the second holding clip (414, 414b, 415) engage.

8. A holder according to any of claim 7, **characterized in that** the first holding clip (412, 412a, 412b) is arranged securely on the carrier (411) and the second holding clip (414, 414b, 415) is arranged on an extendable slide (413) mounted in or on the carrier (411).

9. A holder according to claim 8, **characterized in that** the slide (413) is mounted in an adjustable manner parallel to the longitudinal axis (X - X) of the carrier (411) and can be secured in different positions with a locking device (700), wherein the locking device (700) preferably can be released with a push button (413b) that is accessible on the front wall (414b) of the second holding clip (414, 414b, 415).

10. A holder according to claim 8 or 9, **characterized in that** a support wall (413a) that forms a fixed stop for the device (1, 1A, 1B, 1a) with holder frame (500) or case (1, 1A, 1B) is arranged on the end of the slide (413) facing away from the first holding clip (412, 412a, 412b) .

11. A holder according to one of claims 8 to 10, **characterized in that** the second holding clip (414, 414b, 415) is movably mounted in or on the slide (413) parallel to the longitudinal axis (X - X) and biased with a spring (720) against the support wall (413a) such that the hold-down element (415) of the holding clip (414, 414b, 415) extends beyond the support wall (413a) and covers the edge of the holder frame (500) or case (450, 450A, 450B) with the device (1, 1A, 1B) inserted into the mounting (410) .

12. A holder according to one of claims 8 to 11, **characterized in that** wedge-shaped ramps (411e, 411f) are arranged on the carrier (411) and on the slide (413), wherein the wedge-shaped ramps (411e, 411f) lift a device (1, 1A, 1B, 1a) with holder frame (500) or case (450, 450A, 450B) that is inserted into the mounting (410) until the holder frame (500) or case (450, 450A, 450B) rests against the two hold-down elements (412b, 415) when the slide (413) and carrier (411) slide with respect to each other, wherein preferably the holder frame (500) or the case (450, 450A, 450B) having the device (1, 1A, 1B, 1a) is encompassed and supported in all directions by the ramp (411f) as well as the rear wall (412a) and the hold-down element (412b) at one edge and by the ramp (411e), the support wall (413a) and the hold-down element (415) at the opposite edge in the area of the recesses (511a, 511b, 521a, 521b, 511A).

13. A holder according to one of claims 7 to 12, **characterized in that** the rear wall (412a) and the hold-down element (412b) of the first holding clip (412, 412a, 412b) and the support wall (413a) and the hold-down element (415) of the second holding clip (414, 414b, 415) engage around the recesses (511a, 511b, 521a, 521b, 511A) on the holder frame (500) or on the case (450, 450A, 450B) having the device (1, 1A, 1B, 1a), respectively.

14. A holder according to one of the preceding claims, **characterized in that** the mounting (410) can be connected to the component (381, 382, 383, 610) via a releasable coupling having a connector element (380) on the mounting (410) and a receiving socket (381) on the component.

## Revendications

1. Dispositif de retenue (400) permettant de fixer de manière amovible un dispositif plat approximativement rectangulaire tel qu'une tablette numérique (1, 1A, 1B) ou un smartphone (1a) sur un composant (381, 382, 383, 610), en particulier sur un composant d'un véhicule automobile, dans lequel le dispositif de retenue (400) comporte un socle (410) qui peut être fixé au composant (381, 382, 383, 610) et un cadre de de dispositif de retenue (500) pouvant être fixé de manière amovible au socle (410) pour recevoir le dispositif (1, 1A, 1B, 1a), **caractérisé en ce que** le socle (410) comprend un support (411) avec deux premiers éléments de liaison (412, 412a, 412b, 413a, 414, 415, 622, 625, 630, 630a, 630b) agencés sur des côtés opposés, dont l'écartement est réglable et peut ainsi être adapté à des cadres de dispositif de retenue (500) ou des coques (450, 450A, 450B) ayant des dimensions extérieures différentes, et **en ce que** le cadre de dispositif de retenue (500) présente des seconds éléments de liaison (511, 511A, 511B, 521, 521A, 521B, 711, 721, 731, 741) sur deux bords opposés (510, 520), dans lequel les premiers et seconds éléments de liaison sont conçus pour être complémentaires les uns des autres de telle sorte que lorsque le cadre de dispositif de retenue (500) est inséré dans le socle (410), les premiers éléments de liaison (412, 412a, 412b, 413a, 414, 415, 622, 625, 630, 630a, 630b) et les seconds éléments de liaison (511, 511A, 511B, 521, 521A, 521B, 711, 721, 731, 741) viennent en prise les uns avec les autres pour une fixation mutuelle, de sorte que le cadre de dispositif de retenue (500) ne peut pas être retiré du socle (410) dans le plan du cadre de dispositif de retenue et/ou perpendiculairement au plan du cadre de dispositif de retenue.

2. Dispositif de retenue selon la revendication 1, **caractérisé en ce que**
- le cadre de dispositif de retenue (500) est formé en deux parties, dans lequel un second élément de liaison (511, 511A, 511B, 521, 521A, 521B, 711, 721, 721, 741) est agencé au niveau de chaque partie de cadre de dispositif de retenue (500A, 500B) et/ou
- le cadre de dispositif de retenue (500) fait partie d'une coque (450, 450A, 450B) de réception du dispositif (1, 1A, 1B, 1a) ayant une paroi de fond (450a, 451) ainsi que des parois latérales (510, 520, 500a, 500b, 500c, 500d) entourant le dispositif (1, 1A, 1B, 1a) en totalité, dans lequel de préférence la coque (450, 450A, 450B) présente au moins deux parois de recouvrement latérales opposées (515a', 515b') qui recouvrent le dispositif (1, 1A, 1B, 1a) au moins partiellement latéralement dans la zone de bord de l'écran.

3. Dispositif de retenue selon la revendication 2, **caractérisé en ce que** la coque (450, 450A, 450B) présente sur deux côtés opposés des poches de réception ouvertes (515a, 515b) à l'opposé de l'espace intérieur de la coque (450, 450A, 450B), qui entourent en totalité deux bords opposés du dispositif (1, 1A, 1B, la), dans lequel il est éventuellement prévu que les seconds éléments de liaison (511, 511A, 511B, 521, 521A, 521B, 711, 721, 731, 741) sont agencés au niveau des deux bords longs (510, 520, 500a, 500b, 500c, 500d) de la coque (450, 450A, 450B) et que les poches de réception (515a, 515b) sont agencées sur les deux bords courts (510, 520, 500a, 500b, 500c, 500d) de la coque (450, 450A, 450B), ou dans lequel il est éventuellement prévu que les poches de réception (515a, 515b) sont agencées sur les deux bords longs (510, 520, 500a, 500b, 500c, 500d) de la coque (450, 450A, 450B) et que les seconds éléments de liaison (511, 511A, 511B, 521, 521A, 521B, 711, 721, 731, 741) sont agencés sur les deux bords courts (510, 520, 500a, 500b, 500c, 500d) de la coque (450, 450A, 450B).

4. Dispositif de retenue selon l'une quelconque des revendications précédentes, **caractérisé en ce que** la coque (450, 450A, 450B) est réalisée d'une seule pièce en un matériau élastique, comme par exemple du silicone ou du TPU, et/ou **en ce que** le cadre de dispositif de retenue (500) est réalisé sous la forme d'un profilé en U, de préférence en un matériau élastique tel que du silicone ou du TPU, qui entoure en totalité le bord du dispositif (1, 1A, 1B, 1a) et/ou **en ce que** le bord du dispositif (1, 1A, 1B, 1a) à l'extérieur des seconds éléments de liaison (511, 511A, 511B, 521, 521A, 521B, 711, 721, 731, 741) va être recouvert par un bord de protection (450, 450A, 450B) agencé sur le cadre de dispositif de retenue (414, 414b, 415) ou sur la coque (450, 450A, 450B).

5. Dispositif de retenue selon l'une quelconque des revendications précédentes, **caractérisé en ce que**
- les seconds éléments de liaison (511, 511A, 511B, 521, 521A, 521B, 711, 721, 731, 741) sont formés au niveau des bords (510, 520, 500a, 500c, 500d) du cadre de dispositif de retenue (500) ou de la coque depuis le cadre de dispositif de retenue (500) ou la coque ou sont agencés en tant que parties séparées (511') au niveau du cadre de dispositif de retenue ou de la coque (500), et/ou
- les seconds éléments de liaison (511, 511A, 511B, 521, 521A, 521B, 711, 721, 731, 741) sont formés sous la forme de cavités et/ou de saillies et forment des butées latérales (511a, 511b, 521a, 521b, 511A) pour les premiers éléments de liaison (412, 412a, 412b, 413a, 414, 415, 622, 625, 630, 630a, 630b), dans lequel de préférence les premiers éléments de liaison (412, 412a, 412b, 413a, 414, 415, 622, 625, 630, 630a, 630b) et les seconds éléments de liaison (511, 511A, 511B, 521, 521A, 521B, 711, 721, 731, 741) sont formés sous la forme de dentures en prise et/ou dans lequel de préférence les cavités et/ou les saillies ou les dentures sont agencées sur les faces d'extrémité (510, 520, 500a, 500b, 500c, 500d) et/ou dans la zone de bord du côté avant et/ou arrière du cadre de dispositif de retenue (500) ou de la coque (450, 450A, 450B).

6. Dispositif de retenue selon l'une quelconque des revendications précédentes, **caractérisé en ce que** les seconds éléments de liaison (511, 511A, 511B, 521, 521A, 521B, 711, 721, 731, 741) sont agencés approximativement au milieu des bords (510, 520, 500a, 500c, 500d) du cadre de dispositif de retenue (500) ou de la coque (450, 450A, 450B) et/ou **en ce que** les seconds éléments de liaison (511, 511A, 511B, 521, 521A, 521B, 711, 721, 731, 741) sont formés de manière symétrique et présentent des contours identiques.

7. Dispositif de retenue selon l'une quelconque des revendications précédentes, **caractérisé en ce que** les premiers éléments de liaison (412, 412a, 412b, 413a, 414, 415, 622, 625, 630, 630a, 630b) sont en forme d'agrafe et comportent une première agrafe de retenue (412, 412a, 412b) avec une patte de maintien (412b) et un second agrafe de retenue (414, 414b, 415) avec une patte de maintien (415), qui viennent en prise dans les seconds éléments de liaison (511, 511A, 511B, 521, 521A, 521B, 711, 721, 731, 741) et/ou qui saisissent les seconds éléments de liaison, dans lequel il est éventuellement prévu que les seconds éléments de liaison (511, 511A, 511B, 521, 521A, 521B, 711, 721, 731, 741) sont formés sous la forme de cavités avec des butées latérales (511a, 511b, 521a, 521b, 511A), dans lesquelles la première agrafe de retenue (412, 412a, 412b) et la seconde agrafe de retenue (414, 414b, 415) viennent en prise.

8. Dispositif de retenue selon la revendication 7, dans lequel la première agrafe de retenue (412, 412a, 412b) est agencée de manière fixe au niveau du support (411) et la seconde agrafe de retenue (414, 414b, 415) est agencée sur un chariot coulissant (413) monté au niveau de ou dans le support (411).

9. Dispositif de retenue selon la revendication 8, **caractérisé en ce que** le chariot (413) est monté pouvant être ajusté parallèlement à l'axe longitudinal (X-X) du support (411) et pouvant être bloqué dans différentes positions à l'aide d'un dispositif d'arrêt (700), dans lequel le dispositif d'arrêt (700) peut de préférence être rendu amovible à l'aide d'un bouton (413b) accessible sur la paroi avant (414b) de la seconde agrafe de retenue (414, 414b, 415).

10. Dispositif de retenue selon la revendication 8 ou 9, **caractérisé en ce qu'**une paroi d'appui (413a) est agencée au niveau de l'extrémité du chariot (413) opposée à la première agrafe de retenue (412, 412a, 412b), qui forme une butée fixe pour le dispositif (1, 1A, 1B, la) avec le cadre de dispositif de retenue (500) ou la coque (1, 1A, 1B).

11. Dispositif de retenue selon l'une quelconque des revendications 8 à 10, **caractérisé en ce que** la seconde agrafe de retenue (414, 414b, 415) est montée mobile parallèlement à l'axe longitudinal (X-X) dans ou au niveau du chariot (413), et est rappelée avec un ressort contre la paroi d'appui (413a) de sorte que la patte de maintien (415) de l'agrafe de retenue (414, 414b, 415) fait saillie au-delà de la paroi d'appui (413a) et recouvre le bord du cadre de dispositif de retenue (500) ou de la coque (450, 450A, 450B) avec le dispositif (1, 1A, 1B) inséré dans le socle (410).

12. Dispositif de retenue selon l'une quelconque des revendications 8 à 11, **caractérisé en ce que** des rampes en forme de cale (411e, 411f) sont agencées sur le dispositif de retenue (411) et le chariot (413), qui relèvent un dispositif (1, 1A, 1B, 1a) inséré dans le socle (410) avec le cadre de dispositif de retenue (500) ou la coque (450, 450A, 450B) en poussant le chariot (413) et le support (411) l'un contre l'autre jusqu'à ce que le cadre de dispositif de retenue (500) ou la coque (450, 450A, 450B) se trouve au niveau des deux pattes de maintien (412b, 415), dans lequel de préférence le cadre de dispositif de retenue (500) ou la coque (450, 450A, 450B) vient en prise avec le dispositif (1, 1A, 1B, 1a) via la rampe (411f), la paroi arrière (412a) et la patte de maintien (412b) au niveau d'un bord, et via la rampe (411e), la paroi d'appui (413a) et la patte de maintien (415) au niveau d'un bord opposé dans la zone des cavités (511a, 511b, 521a, 521b, 511A), en étant en appui en totalité.

13. Dispositif de retenue selon l'une quelconque des revendications 7 à 12, **caractérisé en ce que** la paroi arrière (412a) et la patte de maintien (412b) de la première agrafe de retenue (412, 412a, 412b) et la paroi d'appui (413a) ainsi que la patte de maintien (415) de la seconde agrafe de retenue (414, 414b, 415) viennent en prise avec les cavités (511a, 511b, 521a, 521b, 511A) sur le cadre de dispositif de retenue (500) ou sur la coque (450, 450A, 450B) avec le dispositif (1, 1A, 1B, la).

14. Dispositif de retenue selon l'une quelconque des revendications précédentes, **caractérisé en ce que** le socle (410) peut être relié au composant via un raccord libérable avec un élément enfichable (380) au niveau du socle (410) et une douille de réception (381) sur le composant (381, 382, 383, 610).
